# EUROPEAN PATENT SPECIFICATION

(11) **EP 2 823 944 B1**
(45) Date of publication and mention of the grant of the patent: **21.12.2016**
(21) Application number: 13758080.9
(22) Date of filing: 21.02.2013
(51) Int. Cl.: B28D 1/24, B28D 5/00, C03B 33/10

(54) **SCRIBING WHEEL AND METHOD FOR MANUFACTURING SAME**
ANREISSRAD UND HERSTELLUNGSVERFAHREN DAFÜR
ROUE DE RAINURAGE ET SON PROCÉDÉ DE FABRICATION

(30) Priority: 08.03.2012 JP 2012051444; 29.03.2012 JP 2012075718; 13.04.2012 JP 2012092165; 13.04.2012 JP 2012092166; 30.05.2012 JP 2012123046
(43) Date of publication of application: 14.01.2015
(73) Proprietor: Mitsuboshi Diamond Industrial Co., Ltd., Settsu Osaka 566-0034 (JP)
(72) Inventor: TOMEI, Naoko, Settsu city Osaka 566-0034 (JP); KITAICHI, Mitsuru, Settsu city Osaka 566-0034 (JP); FUKUNISHI, Toshio, Settsu city Osaka 566-0034 (JP)
(74) Representative: TBK
(86) International application number: PCT/JP2013/054283
(87) International publication number: WO 2013/133030

(56) References cited:
- EP-A1- 1 712 339
- JP-A- H04 224 128
- JP-A- H05 254 865
- JP-A- H05 254 865
- JP-A- 2004 058 301
- JP-A- 2007 307 673
- JP-A- 2007 307 673
- JP-A- 2011 104 721
- JP-A- 2011 121 143
- JP-A- 2011 126 754
- JP-A- 2011 126 754
- JP-A- 2011 213 589
- JP-A- 2012 011 475

## Description

### Technical Field

The present invention relates to a scribing wheel for scribing a brittle material substrate such as a ceramic substrate or a glass substrate by pressure contact and rolling, and to a method for manufacturing the scribing wheel.

### Background Art

EP 1 712 339 A1 discloses a method for manufacturing a scribing wheel that is formed with a ridge line along a circumferential area and has a blade edge including said ridge line and tilted surfaces on both sides of said ridge line, the method comprising: rough grinding said tilted surfaces including a ridge line area of a disk-shaped scribing wheel base material with an abrasive to form first ground surfaces, said ridge line area where the tilted surfaces obliquely formed along the circumferential area by lateral surfaces on both sides intersect with each other being formed of diamond (PCD); and grinding, in particular final grinding (ground and finished), tilted surfaces including a ridge line area of said first ground surface. EP 1 712 339 A1 also discloses a scribing wheel that is formed with a ridge line along a circumferential area and has a blade edge including said ridge line and tilted surfaces on both sides of said ridge line, the scribing wheel comprising:
a scribing wheel base material formed with a blade edge area along a circumference of a disk; diamond (PCD) formed on a blade edge surface of said scribing wheel base material; first ground surfaces ground with an abrasive in areas on both sides of a ridge line; and second ground surfaces ground with an abrasive in areas on both sides of a ridge line at a tip of said first ground surface, wherein: an angle of an apex where said second ground surfaces intersect with each other is larger than an angle of an apex where said first ground surfaces intersect with each other.
A conventional scribing wheel uses a disk made of cemented carbide or polycrystalline sintered diamond (hereinafter referred to as PCD) as a base material as disclosed in International Publication WO2003/51784.

The PCD is one made by sintering diamond particles together with cobalt or the like. A scribing wheel is one in which obliquely grinding down a circumferential edge from both sides of the disk serving as the base material forms a V-shaped blade edge as the circumferential edge. Rotatably pivotally attaching the scribing wheel formed in this manner to a scribing head or the like of a scribing machine, and moving the scribing wheel along the surface of a brittle material substrate while pressing the scribing wheel against the brittle material substrate with a predetermined load can perform scribing while rolling the scribing wheel.

In Japanese Unexamined Patent Publication JP-A-Hei6-56451 discloses a glass cutter in which in order to eliminate a slip on a brittle material substrate, in particular, on a glass sheet, grinding a blade edge in directions forming an angle with radial directions from a rotary shaft when viewed from the front of the rotary shaft forms striations.

In Japanese Unexamined Patent Publication JP-A-Hei4-224128 discloses a glass cutting blade that is for cutting a glass substrate and has a V-shaped blade edge of which the surface is coated with diamond in order to prolong the life of the glass cutting blade. Coating a diamond film on the surface of the blade edge formed of ceramic compatible with diamond, and performing surface grinding treatment of the diamond film shape the glass cutting blade. Patent Document 3 describes that such a glass cutting blade can cut high hardness glass so as to exhibit a smooth cutting surface with the life of the blade kept long.

Also, Japanese Unexamined Patent Publication JP-A2011-126754 discloses a diamond covered cutting blade formed by coating a base material made of cemented carbide or the like with a diamond layer in order to prevent a slip or the deterioration of cutting quality when cutting an optical fiber, a glass substrate, or the like. In this Document, not performing surface smoothing treatment after the coating characterizes the diamond layer.

Japanese Unexamined Patent Publication JP-A2012-11475 discloses a diamond-coated tool including a blade area formed by coating the surface of a tool base material with a diamond film, in which irradiating ion beams grinds the diamond film. This Document discloses that grinding a tip area of the blade area to provide, as a ground tip area, a range where a blade edge angle is larger than an original blade edge angle and a blade edge width is 10 to 100 nm can ensure predetermined blade edge strength and obtain excellent cutting quality.

On the other hand, in the case of grinding a diamond coating film, the grinding makes the thickness of the film thinner than that before the grinding, and therefore it is necessary to increase the thickness of an as-deposited film as compared with the case of not performing smoothing treatment. In the past, increasing a deposition time of diamond or stacking diamond films as a multilayer has increased a film thickness. Japanese Patent No. 3477162 describes a diamond-coated cutting tool having a diamond coating film with microcrystalline multilayer structure formed by repeating a nucleus deposition process and a crystal growth process so as to make surface and cross-sectional crystal grain sizes less than or equal to 2 µm. As described, forming a diamond film as a multilayer can form a relatively thick diamond coating film while keeping a crystal grain size of diamond small to reduce surface irregularities of the coating film.

### Prior Art

### Patent Document

[Patent Document 1] International Publication WO2003/51784
[Patent Document 2] Japanese Unexamined Patent Publication JP-A-Hei6-56451
[Patent Document 3] Japanese Unexamined Patent Publication JP-A-Hei4-224128
[Patent Document 4] Japanese Unexamined Patent Publication JP-A2011-126754
[Patent Document 5] Japanese Unexamined Patent Publication JP-A2012-11475
[Patent Document 6] Japanese Patent No. 3477162
[Patent Document 7] Japanese Patent No. 3074143

### Summary of Invention

### Technical Problem

Diamond particles and a binder constitute a conventional scribing wheel formed of polycrystalline sintered diamond (PCD), and therefore the conventional scribing wheel has the disadvantage that scribing a brittle material substrate having high hardness, such as ceramic, rapidly progress abrasion to shorten the life. Also, in recent years, a decrease in thickness of and an increase in size of glass have required sufficient end surface strength of a brittle material substrate at the time of scribing and breaking the brittle material substrate. However, the conventional scribing wheel formed of PCD has large blade edge and ridge line roughnesses depending on the size of diamond grains contained in the material, and therefore it is difficult to reduce each of the roughnesses to a certain level or less even by grinding, so that the conventional scribing wheel has the disadvantage of reducing the end surface strength of a brittle material substrate at the time of scribing and breaking the brittle material substrate.

Also, as described in Japanese Unexamined Patent Publication JP-A-Hei6-56451 when manufacturing a scribing wheel for scribing a glass sheet, grinding the blade edge obliquely with respect to the ridge line of the scribing wheel gives rise to a problem of easily causing chipping in a ridge line area.

The glass cutting blade disclosed in Japanese Unexamined Patent Publication JP-A-Hei4-224128 has a configuration made by using ceramic as a base material, forming the cross-sectional shape as the V-shape, covering the V-shape with the diamond film, and further performing grinding. However, the grinding is only one-step grinding, which cannot sufficiently reduce surface roughness after the grinding. The glass cutting blade described in Patent Document 3 has the surface of the ceramic-made blade edge covered with the diamond film. However, it has turned out that there occurs a problem of easily causing chipping in the blade edge, peeling of the diamond film, and the like in the case of actually scribing a brittle material substrate. In particular, in the case of scribing a brittle material substrate having high hardness, such as ceramic, there is a problem of insufficient strength.

The diamond covered cutting edge described in Japanese Unexamined Patent Publication JP-A2011-126754 has also a problem of poor end surface strength because not performing the smoothing treatment on the surface of the diamond covered cutting edge causes a deterioration in end surface accuracy of a brittle material substrate when scribing the substrate, as compared with the case of not performing grinding. Also, in the diamond covered cutting edge, in addition to ceramic, cemented carbide is cited as the base material, which has been publicly known. However, it has been clarified that in the case of covering the cemented carbide with the diamond layer, the adhesiveness of the film is different depending on the grain size of tungsten carbide grains contained as a hard component or the content of cobalt contained as a binder.

In the case of dividing a brittle material substrate such as a glass substrate, the brittle material substrate is divided along a scribing line after using a scribing wheel to scribe the brittle material substrate. However, flaws remain on the end surface of the divided brittle material substrate, and therefore when applying pressure, breakage often occurs from the end surface. In the case where a V-shaped blade edge formed along the circumference of a scribing wheel has irregularities, flaws remain on the end surface of a divided brittle material substrate, and therefore the mechanical strength of the brittle material substrate reduces. Also, in the case of scribing a brittle material substrate having high hardness, such as ceramic, irregularities at a blade edge may give rise to chipping in the blade edge, or peeling off of a diamond film from any of the irregularities during the scribing. For these reasons, the ridge line of a V-shaped blade edge of a scribing wheel preferably has the smallest possible number of irregularities.

Also, in the scribing wheel described in Japanese Unexamined Patent Publication JP-A2012-11475 irradiating ion beams grinds the blade edge. However, tilted surface areas of the blade edge of the scribing wheel are not sufficiently ground, and roughness remains relatively large. For this reason, there is a problem that the end surface strength of a brittle material substrate is poor when using the scribing wheel to scribe and then divide the substrate. Also, irradiating ion beams gives rise to problems that roughnesses of the tilted surfaces on both sides of the blade edge across the ridge line are different from each other, and making the ridge line linear in a side view is difficult.

Further, the diamond coating film described in Japanese Patent No. 3477162 has the multilayer structure formed by stacking a large number of thin coating films, and therefore properties within each layer of the diamond coating film, and properties among the layers of thin coating films are not uniform. For this reason, even in the case of attempting to form the diamond coating film described in Japanese Patent No. 3477162 on the scribing wheel base material to grind the surface of the coating film, uniform grinding is difficult. Further, there is a problem that grain sizes or the like of the coating film appearing on the surface of the blade edge of the scribing wheel after the grinding are not uniform within the layer and among the layers, so that areas easy to abrade and areas difficult to abrade arise in the wheel blade edge, and therefore scribing a brittle material substrate excessively abrades part of the blade edge to shorten the life of the scribing wheel. Still further, the deformation of the scribing wheel due to the abrasion makes more likely to peel off the diamond coating film to shorten the life of the scribing wheel.

In addition, Japanese Patent No. 3074143 describes a scribing wheel made highly permeable by forming a number of grooves in the circumferential surface of the scribing wheel at predetermined intervals, and using the areas between the grooves as protrusions. Applying a multilayer diamond coating film like the diamond coating film described in Japanese Patent No. 3477162 to such a scribing wheel normally requires a groove forming process from above the diamond coating film. If the depth of the grooves is larger than the thickness of one layer of the film, areas easy to abrade and areas difficult to abrade appear on the lateral surfaces of the grooves, and therefore abrasion and chipping of the grooves occur to give rise to a problem of being difficult to keep the shape of the grooves.

Ceramic substrates include substrates with embedded electronic components such as a multilayer substrate made of high temperature co-fired ceramic (HTCC substrate) and a multilayer substrate made of low temperature co-fired ceramic (LTCC substrate). Diamond particles and a binder constitute the conventional scribing wheel formed of polycrystalline sintered diamond (PCD), and therefore the conventional scribing wheel has the disadvantage that the life thereof is short in the case of scribing a brittle material substrate having high hardness as compared with glass, such as a ceramic, sapphire, or silicon substrate, in particular. Also, in the conventional scribing wheel, it is difficult to reduce the roughness of the ridge line even by grinding the blade edge, and therefore the conventional scribing wheel has a problem of, in the case where a scribing load is large, reducing the end surface strength of a brittle material substrate at the time of scribing and breaking the brittle material substrate.

The present invention is made in consideration of such problems, and an object thereof is to provide a scribing wheel coated with a diamond film, which when used to scribe and divide a brittle material substrate, makes it possible to increase the end surface accuracy of the divided brittle material substrate to increase the end surface strength, as well as improving the adhesiveness of the diamond film to prevent chipping or peeling off, and can make the abrasion of the blade edge difficult to prolong the life thereof, and a method for manufacturing the scribing wheel.

### Means to solve the Problem

The problem is solved by a method for manufacturing a scribing wheel according to claim 1 and by a scribing wheel according to claim 4. Preferred embodiments are defined by the features of claims 2, 3 and 5-8.

### (First scribing wheel and making the same)

A method for manufacturing a scribing wheel of the present invention is formed with a ridge line along a circumferential area and has a blade edge including said ridge line and tilted surfaces on both sides of said ridge line, the method comprises: grinding (rough grinding) said tilted surfaces including a ridge line area of a disk-shaped scribing wheel base material with an abrasive to form first ground surface, said ridge line area where the tilted surfaces obliquely formed along the circumferential area by lateral surfaces on both sides intersect with each other being formed of a diamond film; and grinding (final grinding) tilted surfaces including a ridge line area of said first ground surface with an abrasive having a finer grit than an abrasive for said rough grinding to form second ground surfaces.

The first ground surfaces may be formed such that an apex angle at which the first ground surfaces intersect with each other becomes larger than an apex angle at which tilted surfaces of a diamond film intersect with each other.

The second ground surfaces may be formed such that an apex angle at which the second ground surfaces intersect with each other becomes larger than the apex angle at which the first ground surfaces intersect with each other.

The second ground surfaces may be formed such that the arithmetic average roughness Ra of the second ground surfaces becomes 0.03 µm or less.

The second ground surfaces may be formed such that the arithmetic average roughness Ra of a ridge line area along which the second ground surfaces intersect with each other becomes 0.03 µm or less.

The final grinding may be grinding using a grinding wheel having a grit number of 9000 or more as an abrasive.

A scribing wheel base material may be made of cemented carbide.

A scribing wheel of the present invention is formed with a ridge line along a circumferential area and has a blade edge including said ridge line and tilted surfaces on both sides of said ridge line, the scribing wheel comprises: a scribing wheel base material formed with a blade edge area along a circumference of a disk; a diamond film formed on a blade edge surface of said scribing wheel base material; first ground surfaces ground with an abrasive in areas on both sides of a ridge line formed of said diamond film; and second ground surfaces ground with an abrasive in areas on both sides of a ridge line at a tip of said first ground surface, wherein an angle of an apex where said second ground surfaces intersect with each other is larger than an angle of an apex where said first ground surfaces intersect with each other; and arithmetic average roughness Ra of said second ground surfaces is smaller than arithmetic average roughness Ra of said first ground surfaces.

The apex angle at which the first ground surfaces intersect with each other may be larger than the apex angle at which the tilted surfaces of the diamond film intersect with each other.

The arithmetic average roughness Ra of the second ground surfaces may be 0.03 µm or less.

The arithmetic average roughness Ra of the ridge line area along which the second ground surfaces intersect with each other is 0.03 µm or less.

The scribing wheel of the present invention may be formed with a ridge line along a circumferential area and has a blade edge including said ridge line and tilted surfaces on both sides of said ridge line, the scribing wheel comprised a scribing wheel base material formed with a blade edge area along a circumference of a disk; a diamond film formed on a blade edge surface of said scribing wheel base material; and a ground surface having a larger apex angle of an apex angle of said diamond film, wherein arithmetic average roughness Ra of said ground surface is 0.03 µm or less.

The scribing wheel of the present invention may be formed with a ridge line along a circumferential area and has a blade edge including said ridge line and tilted surfaces on both sides of said ridge line, the scribing wheel comprised a scribing wheel base material formed with a blade edge area along a circumference of a disk; a diamond film formed on a blade edge surface of said scribing wheel base material; and ground surfaces that are ground in areas on both sides of a ridge line formed of said diamond film with abrasive and form a larger apex angle than an apex angle of said diamond film, wherein arithmetic average roughness Ra of a ridge line area where said ground surfaces intersect with each other is 0.03 µm or less.

The scribing wheel and the method for manufacturing the scribing wheel having such features include grinding the blade edge of the scribing wheel in a V-shape as well as, on the ground surfaces, forming the diamond film, and performing rough grinding of only the tip area of the diamond film, followed by the final grinding. Accordingly, irregularities of the ridge line area necessary as the blade edge are reducible. For this reason, excellent effects capable of increasing end surface accuracy and improving end surface strength can be achieved when using the scribing wheel to divide a brittle material substrate. Such features are particularly effective when scribing a thin brittle material substrate to cut the substrate. Also, using the diamond film reduces abrasion of the scribing wheel even in the case of scribing a brittle material substrate having high hardness, and the reduced irregularities of the ridge line area makes chipping in the ridge line area of the film or peeling off of the film less likely to occur at the time of scribing, so that the life of the scribing wheel can be extended. Such features are particularly effective when scribing a hard brittle material substrate.

### (Second scribing wheel and making the same)

A scribing wheel of the present invention is formed with a ridge line along a circumferential area and has a blade edge including said ridge line and tilted surfaces on both sides of said ridge line, the scribing wheel comprised a base material, and a diamond film formed on a blade edge surface of said base material, wherein: said ridge line is formed of the diamond film; and areas formed of the diamond film on both sides of said ridge line have grinding marks parallel to said ridge line.

A method for manufacturing a scribing wheel of the present invention, along a circumferential area of a disk, has a ridge line and a blade edge including said ridge line and tilted surfaces on both sides of said ridge line, the method comprises: providing a through-hole in a center of the disk to use the center as a rotational axis, and forming a blade edge area along the circumferential area to configure a scribing wheel base material; forming a diamond film on the blade edge area of said scribing wheel base material by a chemical vapor deposition method; and grinding surfaces formed with said diamond film parallel to a ridge line so as to make a plane including a circle formed by the ridge line of said diamond film perpendicular to the rotational axis of said scribing wheel base material.

The base material may be made of cemented carbide.

The scribing wheel base material may be formed with a circumferential surface parallel to a rotational axis in the blade edge area.

The ridge line area of the ground area may have cut off grooves at predetermined intervals to use areas between the grooves as protrusions.

The scribing wheel and the method for manufacturing the scribing wheel having such features include forming the diamond film on the scribing wheel base material, and grinding the diamond film at the blade edge parallel to the ridge line of the diamond film. In doing so, fine striations parallel to the ridge line remain. Using this scribing wheel to scribe and then break a brittle material substrate can reduce abrasion of the scribing wheel because of the use of the diamond film even in the case of scribing a brittle material having high hardness, and therefore prolong the life of the scribing wheel. Also, as compared with the use of PCD, the surface roughness of the blade edge of the scribing wheel is reducible by grinding, resulting in effects capable of improving the end surface accuracy of a brittle material substrate, and also improving the end surface strength. Also, grinding parallel to the ridge line of the scribing wheel results in effects of making fine irregularities due to grinding marks less likely to appear in the blade edge and the ridge line to reduce roughness, and even in the case of scribing a brittle material substrate having high hardness, making chipping or peeling off of the diamond film caused by fine irregularities in the ridge line area less likely to occur.

### (Third scribing wheel and making the same)

A scribing wheel of the present invention comprises: a scribing wheel base material that is formed with a ridge line along a circumferential area, and has a blade edge including said ridge line and tilted surfaces on both sides of said ridge line; a single layer of diamond film formed by growing a diamond film having an average diamond grain size of 2 to 10 µm on said surfaces of the blade edge of said scribing wheel base material; and a ground area where grinding a zonal area including the ridge line of said diamond film adjusts a thickness near the ridge line to 5 to 25 µm.

A method for manufacturing a scribing wheel of the present invention is formed with a ridge line along a circumferential area of a disk, and has a blade edge including said ridge line and tilted surfaces on both sides of said ridge line, the method comprises: performing grinding a circumference of a disk-shaped scribing wheel base material so as to obliquely grind down lateral surfaces from both sides to form a blade edge area including tilted surfaces and a ridge line in the circumferential area; generating diamond nuclei on the blade edge area of said scribing wheel base material, and growing a diamond film containing diamond grains having an average grain size of 2 to 10 µm by a chemical vapor deposition method to form a single layer of diamond film; and performing grinding so as to make a plane including a circle formed by a ridge line of said diamond film perpendicular to a rotational axis of said scribing wheel base material to adjust a thickness near the ridge line to 5 to 25 µm.

The ridge line area of the ground area may have cut off grooves at predetermined intervals to use areas between the grooves as protrusions.

The scribing wheel and the method for manufacturing the scribing wheel having such features include forming a diamond film having single layer structure by attaching diamond micro-particles on a scribing wheel base material and growing crystals. This can make the diamond film uniform to easily improve the accuracy of a subsequent grinding process. Also, because of the uniform film, when scribing a brittle material substrate having high hardness, the blade edge surface uniformly abrades, resulting in the improvement of abrasion resistance. Further, grinding the diamond film can reduce the surface roughness of the blade edge of the scribing wheel, resulting in effects capable of improving the end surface accuracy of a brittle material substrate, and also improving the end surface strength. Still further, even in the case of scribing a brittle material substrate having high hardness, an effect of making chipping or peeling off due to fine irregularities less likely to occur in the ridge line area is can be achieved.

### (Forth scribing wheel and making the same)

A scribing wheel of the present invention comprises: a scribing wheel base material that is formed with a ridge line along a circumferential area, and has a blade edge including said ridge line and tilted surfaces on both sides of said ridge line; a diamond film formed by growing a diamond film having an average diamond grain size of 2 µm or less on a blade edge surface of said scribing wheel base material; and a ground area where grinding a zonal area including a ridge line of said diamond film adjusts a thickness near the ridge line to 5 to 25 µm.

A method for manufacturing a scribing wheel of the present invention is formed with a ridge line along a circumferential area of a disk, and has a blade edge including said ridge line and tilted surfaces on both sides of said ridge line, the method comprises: performing grinding a circumference of a disk-shaped scribing wheel base material so as to obliquely grind down lateral surfaces from both sides to form a blade edge area including tilted surfaces and a ridge line in the circumferential area; generating diamond nuclei on the blade edge area of said scribing wheel base material, and growing a diamond film containing diamond grains having an average grain size of 2 µm or less by a chemical vapor deposition method to form a diamond film; and performing grinding so as to make a plane including a circle formed by a ridge line of said diamond film perpendicular to a rotational axis of said scribing wheel base material to adjust a thickness near the ridge line to 5 to 25 µm.

The diamond film may have multilayer structure, with repeating the generation of diamond nuclei and the growth of a diamond layer multiple times.

The ridge line area of the ground area may have cut off grooves at predetermined intervals to use areas between the grooves as protrusions.

The scribing wheel and the method for manufacturing a scribing wheel having such features make it possible to reduce the surface roughness of the blade edge of the scribing wheel by grinding as compared with a scribing wheel including a diamond film having large diamond grain sizes, resulting in effects capable of improving the end surface accuracy of a brittle material substrate, and also improving the end surface strength. Also, even in the case of scribing a brittle material substrate having high hardness, an effect of making chipping or peeling off due to fine irregularities less likely to occur in the ridge line area can be achieved.

### (Fifth scribing wheel and making the same)

A scribing wheel of the present invention comprises: a disk-shaped scribing wheel base material; and a diamond film formed on a blade edge area of said scribing wheel base material, wherein said scribing wheel base material uses cemented carbide containing: tungsten carbide particles having an average particle size at least 0.5 µm and at most 2.0 µm as a main component; and cobalt as a binder within a 4 to 8 weight % range.

A method for manufacturing a scribing wheel of the present invention having a blade edge along a circumferential area of a disk, the method comprises: forming a blade edge area in the circumferential area of the disk to configure a scribing wheel base material, the disk using cemented carbide containing: tungsten carbide particles having an average particle size at least 0.5 µm and at most 2.0 µm as a main component; and cobalt as a binder within a 4 to 8 weight % range; and forming a diamond film on the blade edge area of said scribing wheel base material by a chemical vapor deposition method.

The scribing wheel base material may use cemented carbide containing tungsten carbide having an average grain size being at least 0.7µm and at most 1.2µm as a main component.

The scribing wheel base material may use cemented carbide containing cobalt in a 5 to 6 weight % range.

The scribing wheel and the method for manufacturing a scribing wheel having such features include, as the scribing wheel base material, with use of the cemented carbide containing: the tungsten carbide grains having grain sizes within the predetermined range; and cobalt as the binder, depositing the diamond film on the surface of the scribing wheel base material and grinding the diamond film to form the scribing wheel. This can improve the adhesiveness of the diamond film, and thereby improve the abrasion resistance of the scribing wheel to prolong the life. Also, the diamond film is present in the entire area at the blade edge coming into contact with a brittle material substrate, and therefore the roughness of the ridge line is reducible. Accordingly, when using this scribing wheel to perform a scribing process followed by breaking, effects capable of improving the end surface accuracy of a cut surface of a brittle material substrate, and as a result, improving the end surface strength can be achieved.

### Advantageous Effects of Invention

In the scribing wheel and the method for manufacturing the scribing wheel according to the present invention as defined by the claims, in addition to grinding the blade edge of the scribing wheel in the V-shape, as well as forming the diamond film on the ground surface, performing the rough grinding of only the tip area is followed by the final grinding. Accordingly, irregularities of the ridge line area necessary as the blade edge is reducible. For this reason, excellent effects capable of improving end surface accuracy and improving end surface strength when using the scribing wheel to divide a brittle material substrate can be achieved.

### Brief Description of Drawings

[Fig. 1] Fig. 1 includes front and side views of a scribing wheel according to embodiment 1 of the present invention.
[Fig. 2] Fig. 2 is a side view illustrating manufacturing steps of the scribing wheel of the present embodiment.
[Fig. 3A] Fig. 3A is an enlarged cross-sectional view of a tip area illustrating a state of forming a diamond film on a base material for the scribing wheel according to the present embodiment.
[Fig. 3B] Fig. 3B is an enlarged cross-sectional view illustrating the tip area of the scribing wheel after rough grinding.
[Fig. 3C] Fig. 3C is an enlarged cross-sectional view illustrating the tip area of the scribing wheel after final grinding.
[Fig. 3D] Fig. 3D is an enlarged cross-sectional view illustrating the tip area of the scribing wheel after final grinding in another example.
[Fig. 4A] Fig. 4A is an enlarged cross-sectional view of a ridge line area of the blade edge before grinding according to a variation of the present embodiment.
[Fig. 4B] Fig. 4B is an enlarged cross-sectional view of the ridge line area of the blade edge after grinding according to the variation of the present embodiment.
[Fig. 5] Fig. 5 includes front and side views of a scribing wheel according to embodiment 2 of the present invention.
[Fig. 6A] Fig. 6A is an enlarged cross-sectional view of a ridge line area of the blade edge before grinding according to embodiment 2.
[Fig. 6B] Fig. 6B is an enlarged cross-sectional view of the ridge line area after grinding according to embodiment 2.
[Fig. 7A] Fig. 7A is a side view illustrating a state of grinding the blade edge of the scribing wheel according to embodiment 2 of the present invention.
[Fig. 7B] Fig. 7B is a plan view illustrating the state of grinding the blade edge of the scribing wheel according to embodiment 2 of the present invention.
[Fig. 8] Fig. 8 is an enlarged view of a ridge line area of the scribing wheel after grinding according to embodiment 2 or 3.
[Fig. 9A] Fig. 9A is an enlarged cross-sectional view of a ridge line area of the blade edge before grinding according to a variation of embodiment 2 or 3.
[Fig. 9B] Fig. 9B is an enlarged cross-sectional view of the ridge line area after grinding according to the variation of embodiment 2 or 3.
[Fig. 10A] Fig. 10A is a front view of a scribing wheel according to embodiment 4 of the present invention.
[Fig. 10B] Fig. 10B is an enlarged cross-sectional view of a ridge line area after grinding according to embodiment 4.
[Fig. 10C] Fig. 10C is an enlarged view of a circular area illustrated in Fig. 10A.
[Fig. 11] Fig. 11 includes front and side views of a scribing wheel according to embodiment 5 of the present invention.
[Fig. 12A] Fig. 12A is an enlarged cross-sectional view of a ridge line area of the blade edge before grinding according to embodiment 5.
[Fig. 12B] Fig. 12B is an enlarged cross-sectional view of the ridge line area after grinding according to embodiment 5.
[Fig. 13A] Fig. 13A is a front view of a scribing wheel according to embodiment 6 of the present invention.
[Fig. 13B] Fig. 13B is an enlarged cross-sectional view of a ridge line area after grinding according to embodiment 6.
[Fig. 13C] Fig. 13C is an enlarged view of a circular area illustrated in Fig. 13A.
[Fig. 14] Fig. 14 includes front and side views of a scribing wheel according to embodiment 1 of the present invention.
[Fig. 15] Fig. 15 is a conceptual diagram illustrating a state of generating a diamond multilayer film on a scribing wheel base material according to embodiment 7 of the present invention.
[Fig. 16A] Fig. 16A is an enlarged cross-sectional view of a ridge line area of the blade edge before grinding according to embodiment 7.
[Fig. 16B] Fig. 16B is an enlarged cross-sectional view of the ridge line area after grinding according to embodiment 7.
[Fig. 17A] Fig. 17A is a front view of a scribing wheel according to embodiment 8 of the present invention.
[Fig. 17B] Fig. 17B is an enlarged cross-sectional view of a ridge line area after grinding according to embodiment 8.
[Fig. 17C] Fig. 17C is an enlarged view of a circular area illustrated in Fig. 17A.
[Fig. 18] Fig. 18 includes front and side views of a scribing wheel according to embodiment 1 of the present invention.
[Fig. 19A] Fig. 19A is an enlarged cross-sectional view of a ridge line area of the blade edge according to embodiment 9.
[Fig. 19B] Fig. 19B is an enlarged cross-sectional view of the ridge line area after grinding according to embodiment 9.
[Fig. 20A] Fig. 20A is a front view of a scribing wheel according to embodiment 10 of the present invention.
[Fig. 20B] Fig. 20B is an enlarged cross-sectional view of a ridge line area after grinding according to embodiment 10.
[Fig. 20C] Fig. 20C is an enlarged view of a circular area illustrated in Fig. 20A.
[Fig. 21A] Fig. 21A is a diagram illustrating the arithmetic average roughnesses of scribing wheels according to examples 1 and 4 of embodiment 1 before and after grinding.
[Fig. 21B] Fig. 21B is a diagram illustrating the arithmetic average roughnesses of scribing wheels according to examples 2 and 5 of embodiment 1 before and after grinding.
[Fig. 21C] Fig. 21C is a diagram illustrating the arithmetic average roughnesses of scribing wheels according to examples 3 and 6 of embodiment 1 before and after grinding.
[Fig. 22A] Fig. 22A is a diagram illustrating the blade edge angles and arithmetic average roughnesses of a scribing wheel according to example 7 of embodiment 5 or 6 before and after grinding.
[Fig. 22B] Fig. 22B is a diagram illustrating the blade edge angles and arithmetic average roughnesses of a scribing wheel according to example 8 before and after grinding.
[Fig. 22C] Fig. 22C is a diagram illustrating the blade edge angles and arithmetic average roughnesses of a scribing wheel according to example 9 before and after grinding.
[Fig. 23A] Fig. 23A is a diagram illustrating the blade edge angles and arithmetic average roughnesses of scribing wheels according to example 10 and comparative example 1 before and after grinding.
[Fig. 23B] Fig. 23B is a diagram illustrating the blade edge angles and arithmetic average roughnesses of scribing wheels according to example 11 and comparative example 2 before and after grinding.
[Fig. 23C] Fig. 23C is a diagram illustrating the blade edge angles and arithmetic average roughnesses of scribing wheels according to example 12 and comparative example 3 before and after grinding.

### Description of Embodiments

### (Embodiment 1)

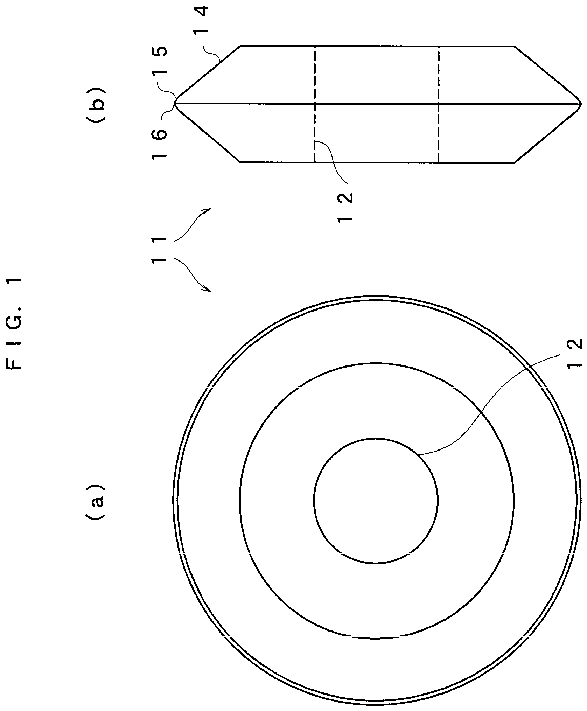

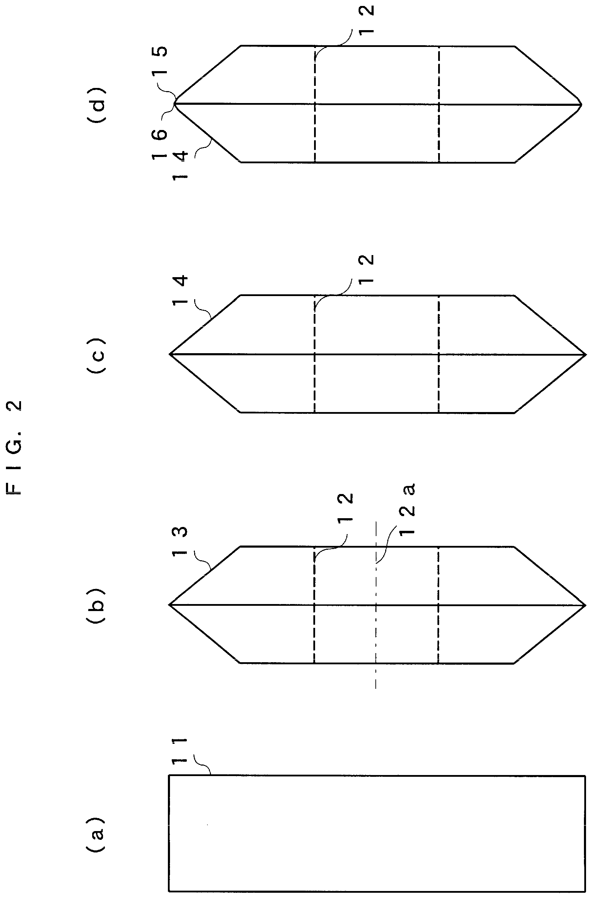

Fig. 1(a) is a front view of a scribing wheel according to embodiment 1 of the present invention, and Fig, 1(b) is a side view of the scribing wheel. Also, Figs. 2(a) to 2(d) are side views illustrating manufacturing steps of the scribing wheel of this embodiment. The first step of manufacturing the scribing wheel 10 is forming a through-hole 12 serving as a shaft hole in the center of a disk 11 serving as a scribing wheel base material made of, for example, cemented carbide or ceramic as illustrated in Fig. 2(b).

Then, grinding the entire circumferential edge of the disk 11 from both sides while rotating the disk 11 around the central axis of the through-hole 12 as a rotational axis 12a with the shaft of a motor or the like being connected into the through-hole 12 forms the circumference edge in a vertically cross-sectionally V-shape having tilted surfaces and a ridge line as illustrated in Fig. 2B, and the tilted surfaces are collectively defined as a ground surface 13. An apex angle of the V-shape is desirably 80° to 150°, and more desirably 90° to 140°. In the case of 80° or less, the tip of the ridge line easily breaks at the time of processing, whereas in the case of 150° or more, usefulness as the blade edge tends to be lost.

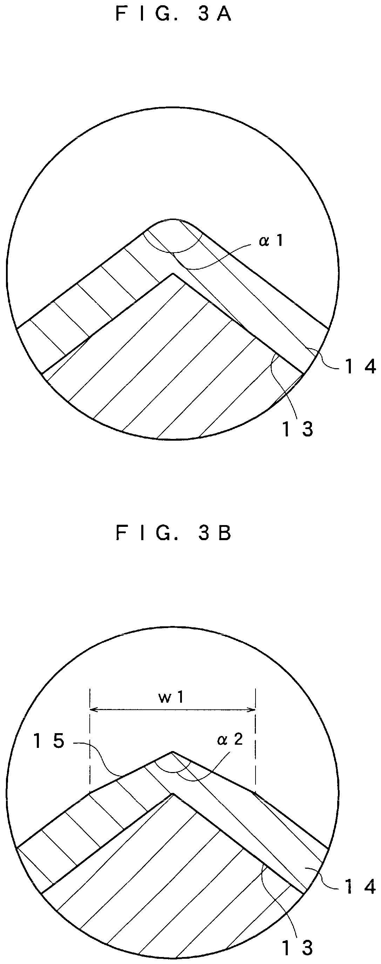

The subsequent step is forming a diamond thin film on the substantially V-shaped ground surface 13. First, as illustrated in an enlarged cross-sectional view of a ridge line area of the blade edge of Fig. 3A, preliminarily roughening the substantially V-shaped ground surface 13 facilitates the attachment of the diamond film. Then, after forming diamond serving as nuclei having grain sizes of submicrometer or less on the tilted surfaces, growing the diamond nuclei by chemical vapor reaction forms the diamond film 14 having a thickness of, for example, 10 to 30 µm. Such a diamond film may be a single layer of diamond film based on one-time formation, or a multilayer diamond film based on repetitive multi-time formation. Note that the diamond film is substantially uniformly formed on the tilted surfaces and ridge line of the scribing wheel base material, and therefore an apex angle of the diamond film is substantially equal to the apex angle of the scribing wheel base material. The apex angle of the diamond film is defined as a first apex angle α1. The apex angle α1 is desirably 80° to 150°, and more desirably 90° to 140°. In the case of 80° or less, the tip of the ridge line easily breaks at the time of processing, whereas in the case of 150° or more, usefulness as the blade edge tends to be lost.

The next step is performing rough grinding of the diamond film 14. The rough grinding uses an abrasive with a grit number of, for example, 8000 or less. In the case of an abrasive with a grit number more than 8000, a grit size of the abrasive is too fine to obtain processability necessary for the diamond film 14. In this processing step, the grinding results in a second apex angle α2 (α2 > α1) only in a zonal area including the ridge line as a centerline. Fig. 3B is an enlarged view illustrating the tip area. A ground surface formed in this manner is defined as a first ground surface 15. Note that the grinding results in the apex angle α2 that takes a value larger than α1 by θ1. θ1 is set to a value larger than zero, for example, 5 °. The width w1 in Fig. 3B indicates a width of the first ground surface 15, and the minimum value of the width w1 is set to, for example, 10 to 20 µm.

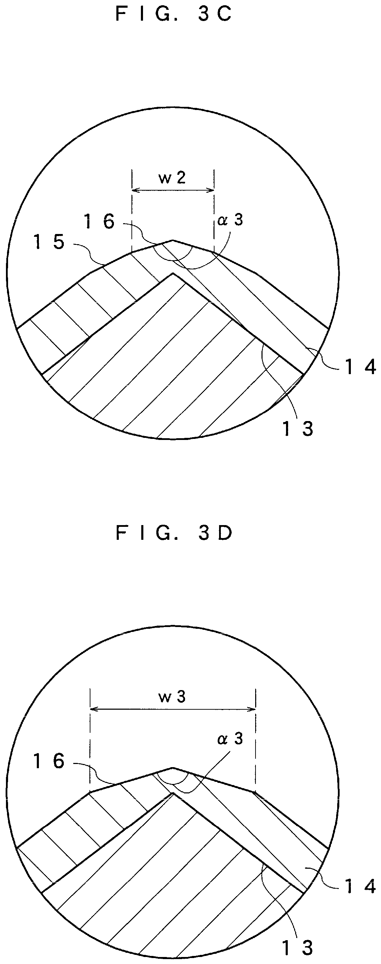

The next step is, as illustrated in Fig. 3C, final grinding performed only in a zonal area that includes the ridge line of the ground surface 15 as a centerline and has a narrower width w2 (w2 < w1). The final grinding is grinding using an abrasive containing finer grit than that for the rough grinding. Also, performing the grinding with a plane including a circle formed by the ground ridge line being perpendicular to the rotational axis 12a and an apex angle being equal to a desired third apex angle α3 (α3 > α2). The ground surface formed by the final grinding in this manner is defined as a second ground surface 16. Note that the grit number of the abrasive is desirably 9000 or more, more desirably 10000 or more, and still more desirably 15000 or more. The final grinding is grinding using the abrasive containing finer grit having a grit number than that for the rough grinding, and therefore the arithmetic average roughness of the second ground surface is smaller than the arithmetic average roughness of the first ground surface. In the final grinding processing step, the grinding is performed until the arithmetic average roughnesses Ra of the surface and ridge line of the blade edge after the grinding reaches or falls below 0.03 µm, and desirably 0.015 µm. In the case where a grit number of an abrasive is 9000 or less, it is difficult to make the arithmetic average roughnesses Ra of the surface and ridge line of the blade edge after the grinding smaller than or equal to 0.03 µm. For this reason, chipping or peeling off of the film is likely to occur, and on the end surface of a divided brittle material substrate, flaws tend to remain easily. Note that the grinding results in the apex angle α3 that takes a value larger than α2 by θ2. θ2 is set to a value larger than zero, for example, 5°. Also, the final grinding makes the plane including the circle formed by the ridge line of the diamond film perpendicular to the central axis of the scribing wheel base material. Note that the scribing wheel of which the final apex angle α3 is large is suitable for use under a high scribing load, whereas the scribing wheel of the final apex angle α3 is small is suitable for use under a low scribing load.

Abrasive such as a grinding wheel grinds the scribing wheel. A grinding wheel performs the rough grinding or final grinding of one of tilted surfaces of the diamond film formed on the blade edge of the scribing wheel. The grinding wheel process makes it easy to grind the tilted surface over the entire circumference of the scribing wheel at the same angle. The completion of the rough or final grinding of the one surface is followed by grinding the other surface in the same manner. As described, the grinding using, in particular, the grinding wheel makes it easy to set the apex angles α2 and α3 to desired values and make the ridge line of the scribing wheel linear in the side view. Further, the grinding using, in particular, the grinding wheel makes it possible to surely and easily form the area having the desired width (w1 or w2).

Forming the blade edge in the two-step V-shape as described makes it possible to perform the final grinding of only the tip area of diamond at the blade edge, which is necessary as the scribing wheel, and reduce irregularities of the ridge line of the blade edge while reducing a processing area to shorten a processing time. Note that, in this embodiment, w2 > w1, and as illustrated in Fig. 3C, after the final grinding, the first ground surface 15 remains on the both sides of the second ground surface 16; however, as illustrated in Fig. 3D, performing the final grinding may completely replace the first ground surface 15 by the second ground surface 16. In such a case, the width w3 is larger than or equal to w1 (desirably w3 = w1).

Grinding in this manner can improve the abrasion resistance of the scribing wheel as compared with the conventional scribing wheel made of sintered diamond because diamond covers the entire area coming into contact with a brittle material substrate. Also, covering the entire area coming into contact with a brittle material substrate with the diamond film makes it possible to decrease the roughnesses of the blade edge area and ridge line contributing to scribing. Further, differently from ion beam-based grinding, being able to grind both sides of the ridge line under the same conditions makes it possible to uniform the roughnesses of ground surfaces on the both sides, as well as making the ridge line linear in a side view. Accordingly, using this scribing wheel to scribe and then divide a brittle material substrate such as a glass substrate or a ceramic substrate results in effects capable of improving the end surface accuracy of a cut surface of the brittle material substrate, and as a result also improving the end surface strength. Further, decreasing the roughnesses of the blade edge and ridge line results in an effect of making the diamond film less likely to be peeled off even in the case of scribing a brittle material substrate having high hardness. For these reasons, the scribing wheel of the present invention is suitable to scribe a ceramic substrate.

It goes without saying that the grit numbers of the abrasives described above are, without limitation thereto, only examples.

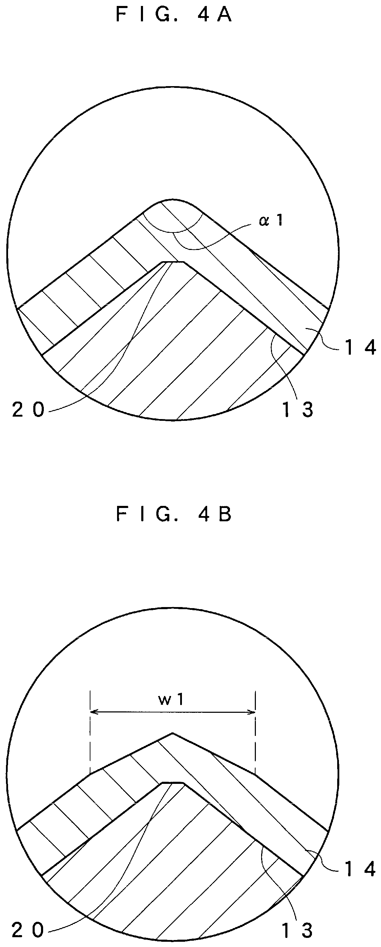

Next, described is a variation of the present embodiment. In this variation, as Fig. 4A illustrates an enlarged view of a tip area of the blade edge, after forming the ground surface 13, further grinding the ridge line parallel to the rotational axis 12a of the scribing wheel provides a cross-sectionally flat circumferential surface 20 in the ridge line area of the base material so as to be parallel to the rotational axis 12a of the scribing wheel. The width of the circumferential surface 20 is, for example, approximately 2 to 10 µm. Subsequently, in the same manner as that in the present embodiment, the CVD method coats the diamond film 14 on the ground surface 13 having the circumferential surface 20. Note that the first apex angle α1 is an angle formed by extension lines of the tilted surfaces of the diamond film 14. After the coating, as illustrated in Fig. 4B, grinding a circumferential area forms the first ground surface, second ground surface, and ridge line. Doing so makes it possible to increase the thickness of the diamond film in the ridge line area as compared with the present embodiment to improve the abrasive resistance and peeling resistance of the scribing wheel.

### (Embodiment 2)

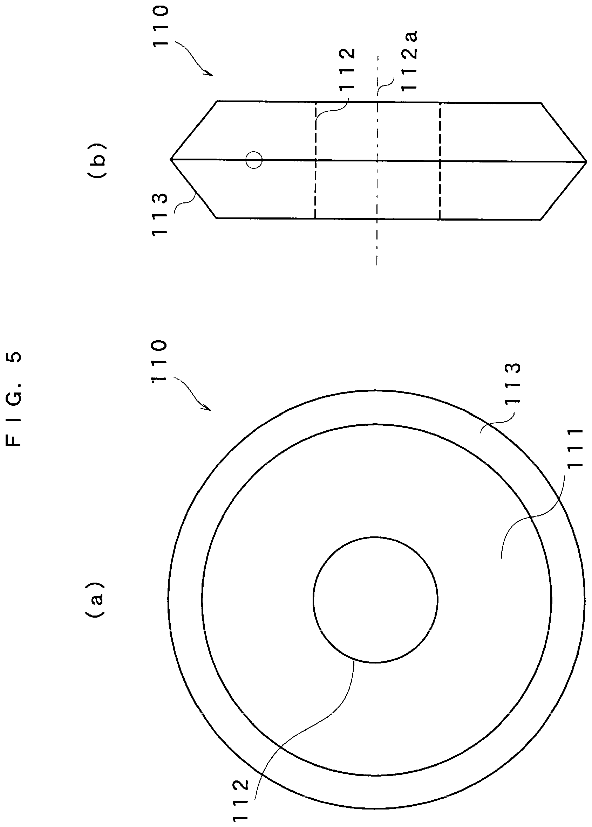

Fig. 5(a) is a front view of a scribing wheel according to embodiment 2, and Fig. 5(b) a side view of the scribing wheel. The first step of manufacturing the scribing wheel is forming a through-hole 112 serving as a shaft hole in the center of a disk 111 serving as a scribing wheel base material made of, for example, cemented carbide or ceramic as illustrated in Fig. 5(a). Then, grinding the entire circumferential edge of the disk 111 from both of front and back sides of the disk obliquely to a rotational axis 112a while rotating the disk 111 around the central axis of the through-hole 112 as the rotational axis 112a with the shaft of an unillustrated motor or the like being connected into the through-hole 112 forms the circumference edge in a vertically cross-sectionally V-shape having a ridge line and tilted surfaces on both sides of the ridge line as illustrated in Fig. 5(b). The tilted surfaces forming the V-shape formed in this manner are collectively defined as a ground surface 113.

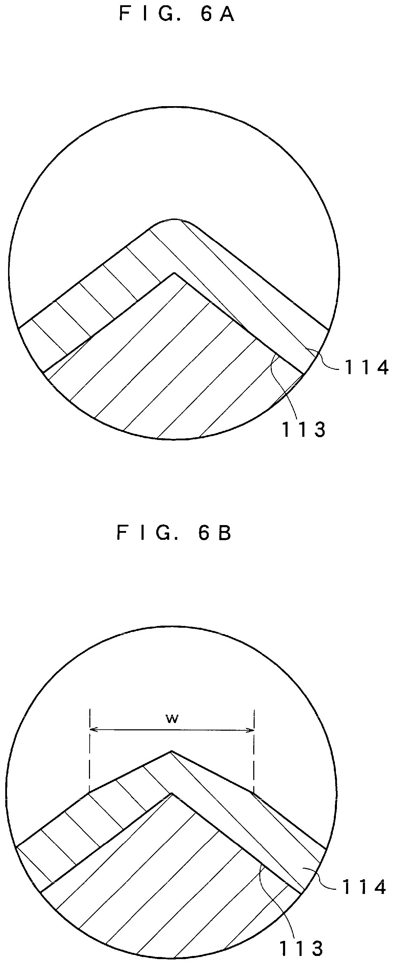

Next, described is the formation of a diamond film using an enlarged cross-sectional view of a ridge line area of the blade edge in Fig. 6A. First, preliminarily roughening the V-shaped ground surface 113 facilitates the attachment of the diamond film. Then, after forming diamond serving as nuclei having grain sizes of submicrometer or less on the tilted surfaces, a chemical vapor growing reaction grows the diamond film. In this manner, a chemical vapor deposition method (CVD method) forms the diamond film 114 having a thickness of, for example, 20 to 30 µm on the tilted surfaces forming the V-shape of the scribing wheel base material.

After that, grinding at least a tip area sharpens the tip as described below. Fig. 6B is a partially enlarged cross-sectional view illustrating a state after the grinding. As illustrated, the grinding may form a more obtuse angle than an apex angle of the original diamond film 114 by, for example, approximately 5°. Also, the grinding makes a plane including a circle formed by a ridge line after the grinding perpendicular to the rotational axis 112a. Note that an area to be ground here may be only a zonal area including the ridge line between the tilted surfaces as a centerline. An area having the width w in Fig. 6B indicates a tip area, i.e., indicates a ground area of the diamond film on both sides of the ridge line, and for example, the minimum value of the width w is set to 10 to 20 µm.

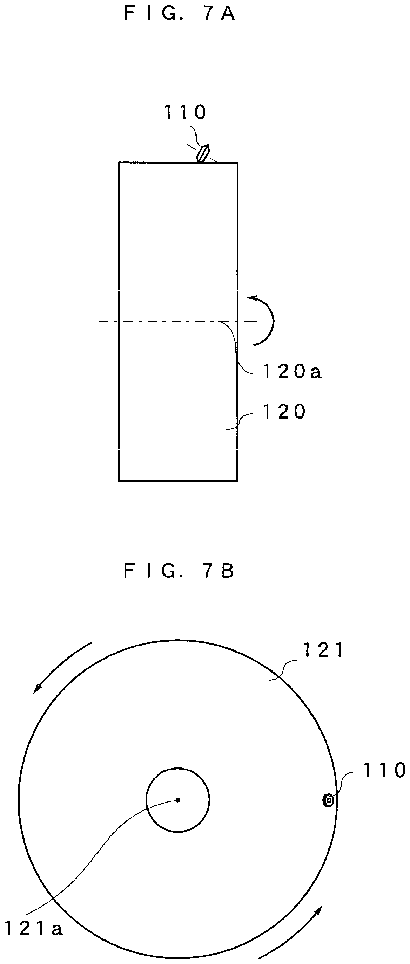

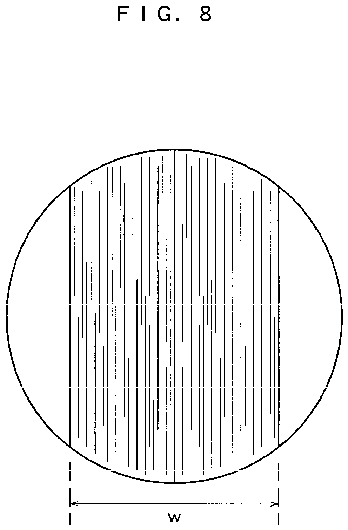

Fig. 7A is a view illustrating a method for grinding the scribing wheel. This method uses a straight grinding wheel 120 for the grinding. The straight grinding wheel 120 is columnar, and on the circumferential surface thereof, a whetstone is formed. Rotating the straight grinding wheel 120 around a grinding wheel rotational axis 120a grinds the blade edge of the scribing wheel having the diamond film. At this time, simultaneously with rotating the straight grinding wheel 120 around the grinding wheel rotational axis 120a at a constant rate, pressing the scribing wheel 110 against the grinding wheel 120 such that the grinding wheel rotational axis 120a and the rotational axis 112a of the scribing wheel 110 form one plane (paper surface) rotates the scribing wheel 110 as well around its rotational axis 112a. Doing so grinds a tilted surface of the blade edge of the scribing wheel parallel to the ridge line. The completion of the grinding of one of the surfaces is followed by grinding the other surface in the same manner. After completion of the grinding as described, as Fig. 8 illustrates an enlarged view of the circular area illustrated in Fig. 5(b), the ground surface having the width w of the blade edge is in a state of being formed with a number of fine grinding marks parallel to the ridge line.

Grinding in this manner can improve the abrasive resistance of the scribing wheel as compared with the conventional scribing wheel made of sintered diamond because diamond covers the entire area coming into contact with a brittle material substrate. Also, covering the entire area coming into contact with a brittle material substrate with the diamond film makes it possible to decrease the roughnesses of the blade edge area and ridge line contributing to scribing. Accordingly, using this scribing wheel to scribe and then divide a brittle material substrate such as a ceramic substrate results in effects capable of improving the end surface accuracy of a cut surface of the brittle material substrate, and as a result also improving the end surface strength. The inventors have found that, at the time of grinding, grinding perpendicularly or obliquely to the ridge line causes the appearance of grinding mark-based fine irregularities on the blade edge and ridge line to easily cause chipping in the ridge line area at the time of scribing. Accordingly, in this invention, performing the grinding parallel to the ridge line can suppress chipping in the ridge line area and peeling off of the diamond film. Further, decreasing the roughnesses of the blade edge and ridge line results in an effect of making the diamond film less likely to be peeled off. For these reasons, the scribing wheel of the present invention is suitable to scribe a ceramic substrate.

### (Embodiment 3)

Next, described is embodiment 3 of the present invention. This embodiment is different from embodiment 2 only in a grinding process. The grinding process in this embodiment uses a disk-shaped cup grinding wheel 121. In the cup grinding wheel 121, a grinding surface is formed on the surfaces of the disk. As illustrated in Fig. 7B, this embodiment grinds a tip surface of a scribing wheel 110 tilted with respect to a grind wheel rotational axis 121a of the cup grinding wheel 121. In this case, simultaneously with rotating the cup grinding wheel 121 around the grinding wheel rotational axis 121a at a constant rate, pressing the scribing wheel 110 against the cup grinding wheel 121 to rotate the scribing wheel 110 around a rotational axis 112a of the scribing wheel 110 such that the grinding wheel rotational axis 121a and the rotational axis 112a form one plane (a plane orthogonal to the paper surface) performs the grinding. Even in the case of performing the grinding in this manner, the scribing wheel is sufficiently small as compared with a circular grinding area in an outer circumferential area of the cup grinding wheel 121, thus being able to perform the grinding substantially parallel to the ridge line. For this reason, being able to finish the scribing wheel with a number of grinding marks parallel to the ridge line formed as illustrated in Fig. 8 results in the same effects as those in the above-described case.

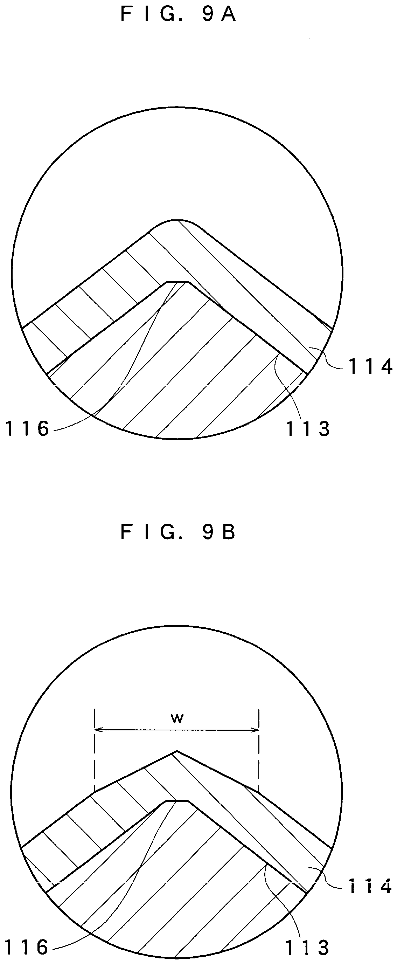

Next, described is a variation of embodiment 2 or 3. As Fig. 9A illustrates an enlarged diagram of a tip area of the blade edge, this embodiment provides a flat circumference surface 116 in the ridge line area of the base material so as to be parallel to the rotational axis 112a of the scribing wheel. Subsequently, in the same manner as that in embodiment 1 or 2, the CVD method coats the diamond film 114 on the ground surface 113. In doing so, the circumferential surface 116 can improve the adhesiveness of the diamond film 114. After the coating,
as illustrated in Fig. 9B, grinding a circumferential area in the manner described above forms the ridge line as in embodiment 1 or 2. Doing so can increase the thickness of the diamond film in the ridge line area as compared with embodiment 1 or 2 to improve the abrasive resistance and peeling resistance of the scribing wheel. Using this scribing wheel to scribe and then divide a brittle material substrate can improve the end surface accuracy of a cut surface of the brittle material substrate, and also improve the end surface strength.

### (Embodiment 4)

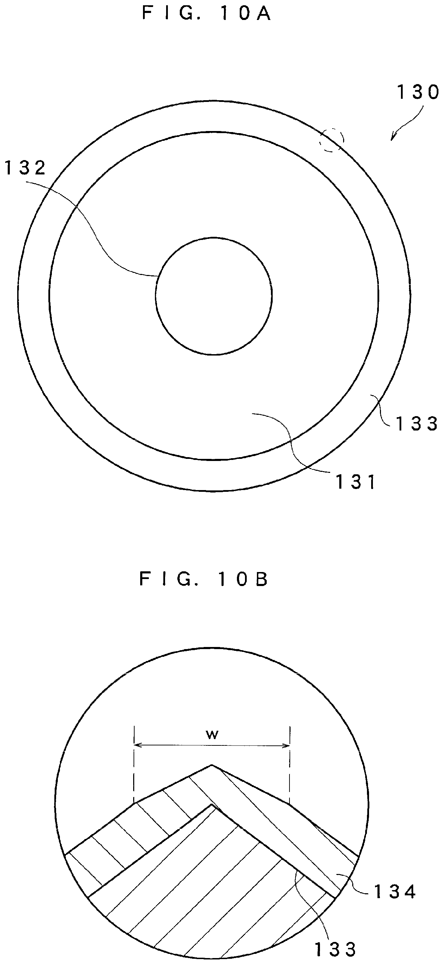

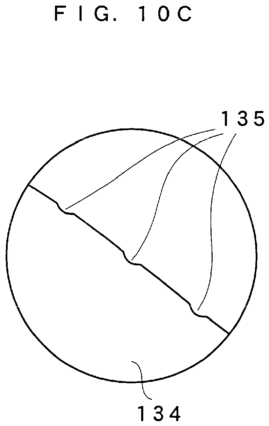

Next, described is embodiment 4 of the present invention. Japanese Patent No. 3074143 proposes the scribing wheel that is made highly penetrable by forming a number of grooves in the circumferential surface of the scribing wheel at predetermined intervals, and using the areas between the grooves as protrusions. The present invention is also applicable to such a scribing wheel. Fig. 10A is a front view of a scribing wheel of this embodiment, Fig. 10B an enlarged cross-sectional view of a ridge line area at the tip, and Fig. 10C an enlarged view of a circular area indicated by an alternate long and short dash line in Fig. 10A. The first step of manufacturing the scribing wheel is forming a through-hole 132 serving as a shaft hole in the center of a disk 131 serving as a scribing wheel base material made of cemented carbide, ceramic, or the like as illustrated in Fig. 10A. Then, grinding the entire circumferential edge of the disk 131 from both sides while rotating the disk 131 with the rotational shaft of a motor or the like being connected into the through-hole 132 forms the circumference edge in a V-shape. Tilted surfaces forming the V-shape formed in this manner are collectively defined as a ground surface 133. In this case again, a CVD method coats a diamond film 134 on a blade edge area of the scribing wheel base material in the same manner as that in embodiment 1, and the same method as that in embodiment 1, 2, or 3 performs grinding. Given that the diamond film 134 is 20 µm thick, as illustrated in Fig. 10C, grooves 135 are formable within the thickness of the diamond film 134. The depth of the grooves of the scribing wheel for making the scribing wheel highly penetrable is, for example, approximately 10 µm, and therefore forming the grooves 135 in the diamond film 134 can realize a highly penetrable scribing wheel.

Also, instead of this, preliminarily forming grooves in the V-shaped blade edge area of the scribing wheel base material, and coating the scribing wheel base material with a diamond film by a CVD method, followed by grinding may configure the scribing wheel.

### (Embodiment 5)

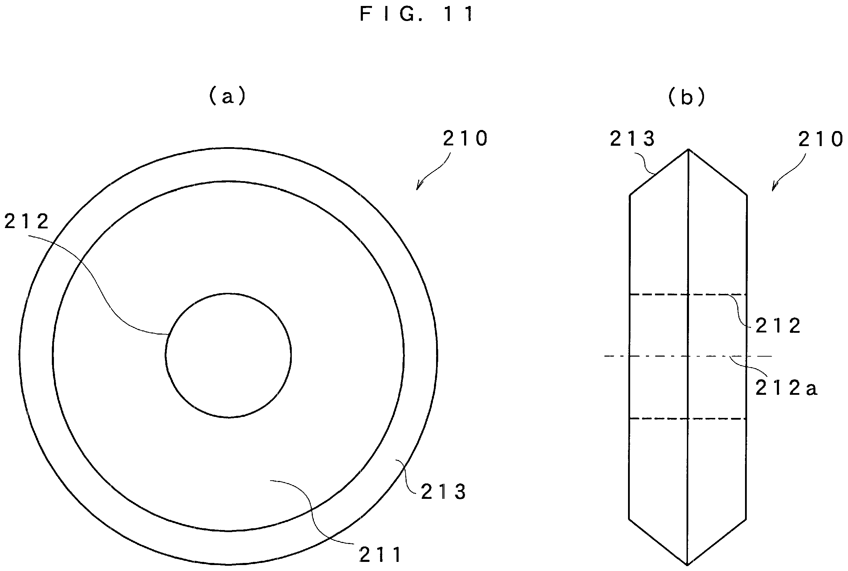

Fig. 11(a) is a front view of a scribing wheel according to embodiment 5 of the present invention, and Fig. 11(b) is a side view of the scribing wheel. The first step of manufacturing the scribing wheel is, as illustrated in Fig. 11(a), forming a through-hole 212 serving as a shaft hole in the center of a disk 211 serving as a scribing wheel base material made of, for example, cemented carbide or ceramic. Then, grinding the entire circumferential edge of the disk 211 obliquely to a rotational axis 212a from both of front and back sides of the disk while rotating the disk 211 around the central axis of the through-hole 212 as the rotational axis 212a with the shaft of an unillustrated motor or the like being connected into the through-hole 212 forms the circumference edge in a vertically cross-sectional V-shape including tilted surfaces and a ridge line as illustrated in Fig. 11(b). The tilted surfaces forming the V-shape formed in this manner are collectively defined as a ground surface 213.

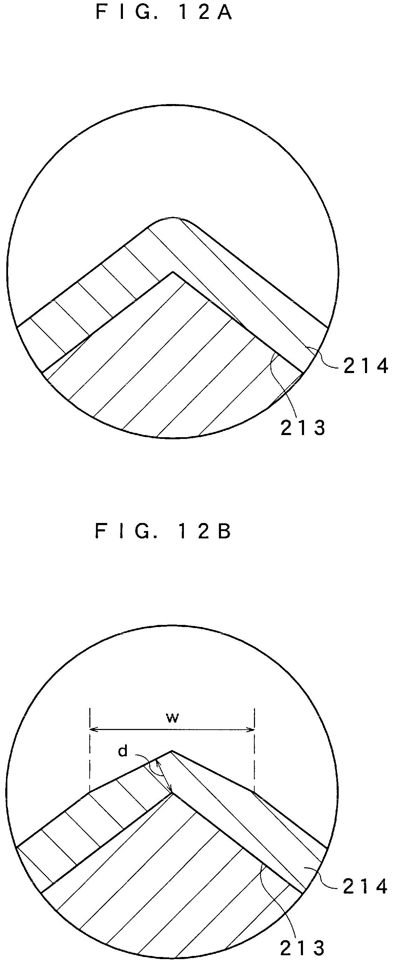

Next, described is the formation of a diamond thin film formed on the ground surface 213. First, preliminarily roughening the V-shaped ground surface 213 facilitates the attachment of the diamond film. Then, keeping the scribing wheel base material 211 at predetermined temperature, pressure, and the like in a predetermined atmosphere generates diamond nuclei on the surface of the ground surface. Each of the nuclei includes single crystalline diamond or the aggregation of single crystalline diamond, and an outside diameter thereof is, for example, a few nm to a few tens nm. Subsequently, a chemical vapor deposition method (CVD method) grows the diamond nuclei to form the diamond thin film. The growth reaches a diamond average grain size to 2 to 10 µm, desirably to 4 to 8 µm, and more desirably approximately to 5 µm, and the film thickness to, for example, 10 to 30 µm. In the case where the diamond grain size exceeds 10 µm, even grinding makes it difficult to sufficiently reduce surface roughness. Also, exceeding 10 µm as the diamond grain size reduces abrasion resistance. Further, exceeding 30 µm as the thickness of the diamond film facilitates peeling off during the deposition, whereas falling below 10 µm makes the film thickness after grinding too thin. In doing so, as Fig. 12A illustrates an enlarged cross-sectional view near the ridge line of the blade edge, a single layer of diamond film 214 is formable on the ground surface 213. The diamond film 214 is single-layered, so that a difference in diamond grain size between layers does not appear, and therefore the diamond film is uniformly formable, thus being able to improve the accuracy of a subsequent grinding process. Also, within the layer, diamond film properties are different between near the diamond nuclei and near the surface of the diamond film; however, sufficiently increasing the thickness of the diamond film 214 to 10 to 30 µm never makes areas near the diamond nuclei having different properties appear on the surface of the blade edge of the scribing wheel even after the grinding. Accordingly, even when scribing a brittle material substrate having high hardness, in particular, areas causing peeling off, areas easy to abrade, or the like never appear on the blade edge surface, thus being able to improve the abrasion resistance and life of the scribing wheel.

Forming the diamond film 214 on the ground surface 213 forms irregularities based on diamond crystals on the film surface, and by detecting the irregularities with a scanning electron microscope (SEM), the average grain size of the diamond grains is measurable. The SEM has a resolution of 0.5 to 4 nm, and therefore by measuring several points of the irregularities formed on the diamond film to measure diameters (the lengths of the diameters) of crystals appearing on the surface, the average grain size can be calculated. As described, in the case of the SEM measurement, the average grain size is measurable only by surface observation. A predetermined numerical value range indicated by this measurement method may be almost the same as a surface roughness range after the grinding.

After that, grinding at least a tip area of the diamond film sharpens the tip. Fig. 12B is a partially enlarged cross-sectional view illustrating a state after the grinding. The grinding may be two-step grinding including rough grinding and final grinding, and the grinding may form a more obtuse angle than an apex angle of the original diamond film 214 by, for example, approximately 5°. The two-step grinding including the rough grinding and the final grinding can sufficiently reduce the surface roughnesses of a ground surface and a ridge line after the grinding while reducing a processing time. Also, the grinding makes a plane including a circle formed by the ground ridge line perpendicular to the rotational axis 212a. Note that a grinding area may be only a zonal area including the ridge line as a centerline. An area having a grinding width w in Fig. 12B indicates a tip area, i.e., the ground area of the diamond film over both sides of the ridge line, and a value of the width w is set to, for example, 10 to 30 µm. Grinding the diamond film having the above-describe thickness in this manner adjusts a thickness d of the thinnest area near the ridge line of the diamond film 214 having the single-layered structure to, for example, 5 µm to 25 µm. A smaller thickness d has a problem of possible peeling off of the diamond film during scribing, whereas a too large thickness d has also a problem of being easy to break due to internal stress. Further, the thickness of the diamond film 214 is 5 to 25 µm, which is sufficiently thick, and therefore even after the grinding, areas near the diamond nuclei having different properties never appear on the blade edge surface of the scribing wheel. Accordingly, being able to variations in grain size and properties of the blade edge surface can eliminate, the areas causing the peeling off and the areas easy to abrade never appear in particular, and therefore the scribing wheel can improve the abrasion resistance.

Abrasive such as a grinding wheel grinds the scribing wheel. A grinding wheel performs the rough grinding or final grinding of one of tilted surfaces of the diamond film formed at the blade edge of the scribing wheel. The grinding wheel process makes it easy to uniform the roughnesses of both of the tilted surfaces, grind each of the tilted surfaces at the same angle throughout the entire circumference of the scribing wheel, and make the ridge line of the scribing wheel linear in a side view. The completion of the grinding of the one surface is followed by grinding the other surface in the same manner. In this grinding process, the grinding continues until the arithmetic average roughness of each of the tilted surfaces after the grinding becomes 0.03 µm or less, and desirably 0.015 µm. Also, preferably, the grinding continues until the arithmetic average roughness of the ridge line becomes 0.03 µm or less, and desirably 0.015 µm.

Such grinding reduces the average roughness of the diamond film coming into contact with a brittle material substrate as compared with the conventional scribing wheel made of sintered diamond, and therefore the roughnesses of the blade edge area and ridge line are reducible. Accordingly, using this scribing wheel to scribe and then divide a brittle material substrate such as a ceramic substrate results in effects capable of improving the end surface accuracy of a cut surface of the brittle material substrate, and as a result also improving the end surface strength. Further, reducing the roughnesses of the blade edge and ridge line results in an effect of making the diamond film less likely to be peeled off. For these reasons, the scribing wheel of the present invention is suitable to scribe a brittle material substrate having high hardness, such as a ceramic substrate.

Meanwhile, as described above, in the case of grinding the entire surface of the diamond film 214 after forming the diamond film 214, the irregularities based on the diamond grains are not directly detectable with an SEM after the grinding, and therefore grain sizes themselves are also not measurable. Therefore, in the following, described is a method for, even after grinding the diamond film, measuring the grain sizes in a ground area in order to check whether or not the diamond grains of the diamond film 214 have a desired grain size.

In the electron backscatter diffraction method (EBSD method), irradiating electron beams to a sample at a tilt angle of 60 to 70° results in diffracted electron beams from a region of 50nm or less below the surface of the sample. Analyzing the backscatter diffraction, information on orientation analysis of a crystalline material can be obtained. The crystal grain sizes of polycrystalline diamond are observable by using such information even after grinding the diamond film.

In order to check the effectiveness of the EBSD method, using a scribing wheel having an average grain size of 2 to 8 µm, which was measured at the film surface before grinding, a base material ridge line angle of 100°, and a diamond film ridge line angle of 120° as a sample, the inventors tried to measure the scribing wheel with the EBSD method. The presence of irregularities or the like on the surface of the scribing wheel as the sample may prevent pattern detection, and therefore pre-processing (precisely grinding) the diamond film 214 of the scribing wheel eliminated such obstacles. Also, the sizes of diamond crystals vary depending on a distance from the scribing wheel base material, and therefore grinding part of the diamond film in the thickness direction exposed the base material, and divided the diamond film into multiple blocks respectively having different distances from the base material. Then, irradiating each of the blocks with electron beams generated reflected electrons, which formed an EBSD pattern, and taking the EBSD pattern as an image by a high-sensitive CCD camera to process the image by an image processor results in the mapping of the crystal sizes through a data analysis system.

In the EBSD method, a measurement result is largely different among the following analytical methods:
A: Calculating an average (arithmetic average) with grain boundaries including twin boundaries.
B: Calculating a weighted average on the basis of an area ratio with grain boundaries including twin boundaries.
C: Calculating an average (arithmetic average) with grain boundaries not including twin boundaries.
D: Calculating a weighted average on the basis of an area ratio with grain boundaries not including twin boundaries.

Results obtained as a grain size using the respective methods substantially met A < C < B < D; however, any of the methods resulted in 2.5 µm or less. From this result, it turns out that the EBSD method calculates a very small numerical value as compared with the case of observing a grain size at the film surface. This may be because small crystals do not appear on the film surface.

In the measurement above, as a result of measuring the inside of the diamond film having an average grain size of 2 to 8 µm measured at the film surface, any of the analytical methods calculated an average grain size of 2.5 µm or less although the average grain size depends on an analytical method. From this, it is considered that even in the case of entirely grinding the film surface, an average grain size of 3 µm or less leads to a surface average grain size of 2 to 10 µm. Accordingly, even after grinding the diamond film 214 as illustrated in Fig. 12B, the surface average grain size is indirectly measurable.

### (Embodiment 6)

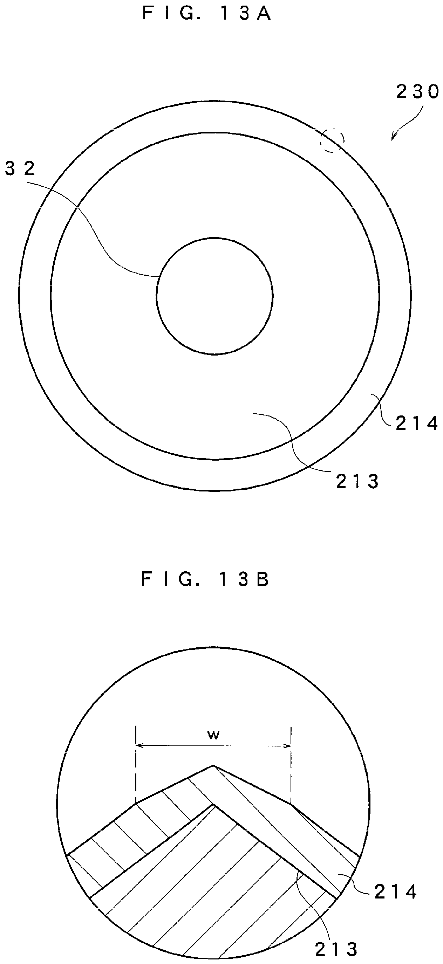

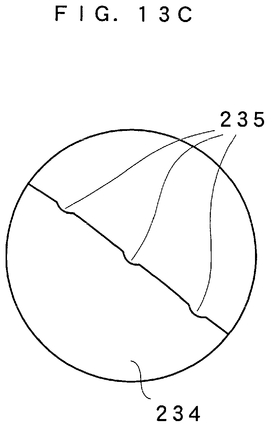

Next, described is embodiment 6 of the present invention. Fig. 13A is a front view of a scribing wheel of this embodiment, Fig. 13B an enlarged cross-sectional view of a ridge line area at the tip, and Fig. 13C an enlarged view of a circular area indicated by an alternate long and short dash line in Fig. 13A. The first step of manufacturing the scribing wheel is, as illustrated in Fig. 13A, forming a through-hole 32 serving as a shaft hole in the center of a disk 231 serving as a scribing wheel base material made of cemented carbide, ceramic, or the like. Then, grinding the entire circumferential edge of the disk 231 from both sides while rotating the disk 231 around the central axis with the shaft of a motor or the like being connected into the through-hole 232 forms the circumference edge in a V-shape. Tilted surfaces forming the V-shape formed in this manner are collectively defined as a ground surface 233. In this case again, a CVD method coats a single layer of diamond film 234 on a blade edge area of the scribing wheel base material in the same manner as that in embodiment 5, followed by grinding. Given that the diamond film 234 is 20 µm thick, as illustrated in Fig. 13C, grooves 235 are formable within the thickness of the diamond film 234. The depth of the grooves of the scribing wheel for making the scribing wheel highly penetrable is, for example, approximately 10 µm, and therefore forming the grooves 235 in the diamond film 234 can realize a highly penetrable scribing wheel.

As described, even in the case of forming the grooves 235 in the diamond film 234, the diamond film is single-layered, and properties are uniform within the film, which makes it easy to uniformly process a number of grooves, and also makes chipping or abrasion in the ridge line area of the diamond film 234 less likely to occur. Accordingly, the scribing wheel having a longer life is obtainable.

Also, instead of this, preliminarily forming grooves in the V-shaped blade edge of the scribing wheel base material, and coating the scribing wheel base material with a diamond film by a CVD method, followed by grinding may configure a scribing wheel.

### (Embodiment 7)

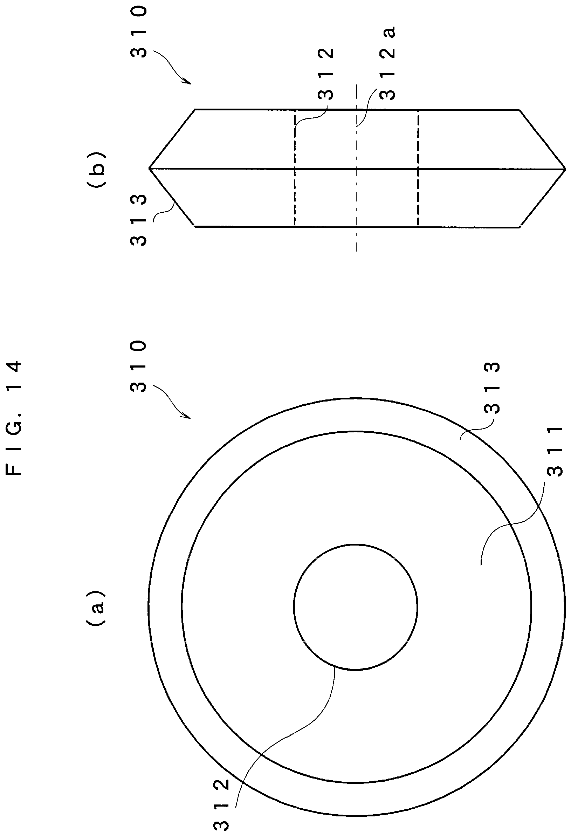

Fig. 14(a) is a front view of a scribing wheel according to embodiment 7 of the present invention, and Fig. 14(b) is a side view of the scribing wheel. The first step of manufacturing the scribing wheel is, as illustrated in Fig. 14(a), forming a through-hole 312 serving as a shaft hole in the center of a disk 311 serving as a scribing wheel base material made of, for example, cemented carbide or ceramic. Then, grinding the entire circumferential edge of the disk 311 obliquely to a rotational axis 312a from both of front and back sides of the disk while rotating the disk 311 around the central axis of the through-hole 312 as the rotational axis 312a with the shaft of an unillustrated motor or the like being connected into the through-hole 312 forms the circumference edge in a vertically cross-sectional V-shape as illustrated in Fig. 14(b). Tilted surfaces forming the V-shape formed in this manner are collectively defined as a ground surface 313.

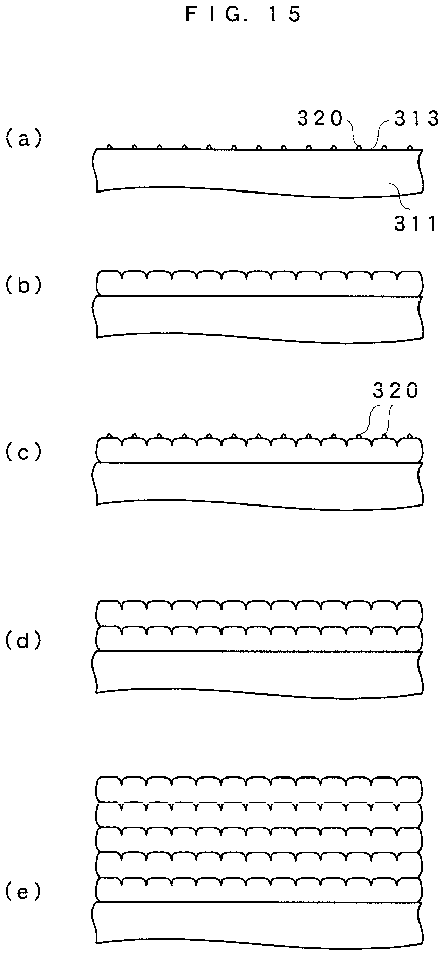

Next, described is the formation of a diamond thin film formed on the ground surface 313. First, preliminarily roughening the V-shaped ground surface 313 facilitates the attachment of the diamond film. Then, keeping the scribing wheel base material 311 at predetermined temperature, pressure, and the like in a predetermined atmosphere generates diamond nuclei 320 on the surface of the ground surface as Fig. 15(a) illustrates an enlarged cross-sectional view near the ridge line of the blade edge. Each of the nuclei includes single crystalline diamond or the aggregation of single crystalline diamond, and an outside diameter thereof is, for example, a few nm to a few tens nm. Subsequently, a chemical vapor deposition method (CVD method) grows the diamond nuclei 320 to form the diamond thin film as illustrated in Fig. 15(b). The growth grows a diamond average grain size to 2 µm or less, and desirably 1 µm or less. Also, the growth grows the film thickness to, for example, 10 to 30 µm. Exceeding 30 µm as the thickness of the diamond film facilitates peeling off during the deposition, whereas falling below 10 µm makes the film thickness after grinding too thin.

In addition, repeating the above deposition multiple times may obtain the required thickness. Specifically, first, a chemical vapor deposition method (CVD method) grows diamond nuclei 320 to form a diamond thin film having a thickness of, for example, 2 µm as illustrated in Fig. 15(b). Then, again keeping the same temperature, pressure, and the like in the same atmosphere generates diamond nuclei 320 on the surface of the diamond thin film as illustrated in Fig. 15(c). Subsequently, as illustrated in Fig. 15(d), the growth of the diamond nuclei in the same conditions continues until an average diamond grain size becomes 2 µm or less, and desirably 1 µm or less. Repeating the attachment of diamond nuclei and the crystal growth multiple times in this manner can form multiple films having two or more layers as illustrated in Fig. 15(e), i.e., a multilayer film including, for example, 10 layers.

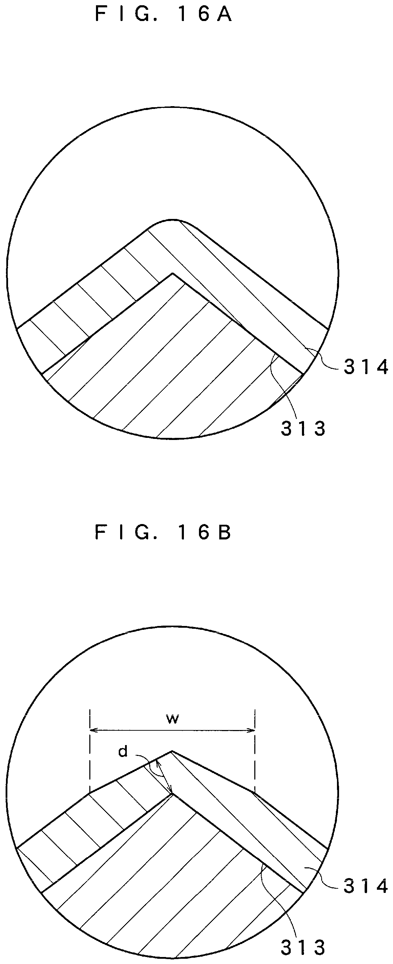

As illustrated in Fig. 16A, in this manner, the diamond film 314 having the average grain size of 2 µm or less, desirably 1 µm or less is formable on the ground surface 313.

After that, grinding at least a tip area sharpens the tip. Fig. 16B is a partially enlarged cross-sectional view illustrating a state after the grinding. The grinding may be two-step grinding including rough grinding and final grinding, and the grinding may form a more obtuse angle than an apex angle of the original diamond film 314 by, for example, approximately 5°. The grinding also makes a plane including a circle formed by the ground ridge line perpendicular to the rotational axis 312a. Note that a grinding area may be only a zonal area including the ridge line as a centerline. An area having a grinding width w in Fig. 16B indicates a tip area, i.e., the ground area of the diamond film over both sides of the ridge line, and a value of the width w is set to, for example, 10 to 30 µm. Grinding the diamond film having the above-describe thickness adjusts a thickness d of the thinnest area near the ridge line of the diamond film 314 to, for example, 5 µm to 25 µm. A smaller thickness d has a problem of possible peeling off of the diamond film during scribing, whereas a too large thickness d also has a problem of being easy to break due to internal stress. Also, in the case of forming a diamond film multiple times to configure a diamond film having multilayer structure, a large grinding amount may make the surface of the blade edge after the grinding uneven due to layer discontinuity. For this reason, in the case of grinding the diamond film having multilayer structure, it is preferable to perform grinding so as to make the surface of the blade edge even by decreasing a grinding amount or by other means.

Abrasive such as a grinding wheel grinds the scribing wheel. A grinding wheel performs the rough grinding or final grinding of one of tilted surfaces of the diamond film formed at the blade edge of the scribing wheel. The grinding wheel process makes it easy to grind the tilted surface at the same angle throughout the entire circumference of the scribing wheel. In the grinding process, the grinding continues until the arithmetic average roughness of the surface after the grinding becomes 0.03 µm or less, and desirably 0.015 µm. Also, preferably, the grinding continues until the arithmetic average roughness of the ridge line becomes 0.03 µm or less, and desirably 0.015 µm. In the present invention, adjusting the grain size of the diamond film 314 to 2 µm or less can make it easy to perform the grinding such that the arithmetic average roughness of the surface after the grinding becomes 0.03 µm or less, and desirably 0.015 µm.

Such grinding reduces the average roughness of the diamond film coming into contact with a brittle material substrate as compared with the conventional scribing wheel made of sintered diamond, and therefore the roughnesses of the blade edge area and ridge line are reducible. Accordingly, using this scribing wheel to scribe and then divide a brittle material substrate such as a ceramic substrate results in effects capable of improving the end surface accuracy of a cut surface of the brittle material substrate, and as a result also improving the end surface strength. Further, reducing the roughnesses of the blade edge and ridge line results in an effect of making the diamond film less likely to be peeled off. For these reasons, the scribing wheel of the present invention is suitable to scribe a ceramic substrate.

### (Embodiment 8)

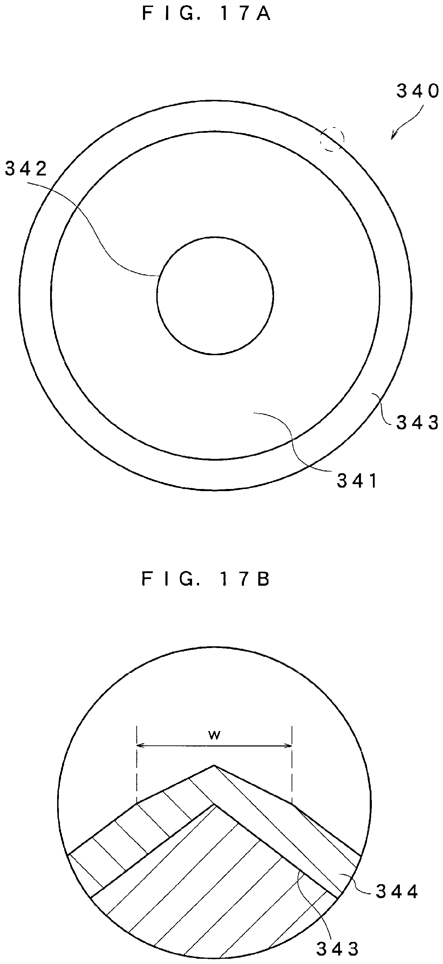

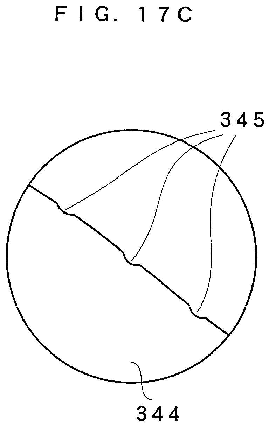

Next, described is embodiment 8 of the present invention. Fig. 17A is a front view of a scribing wheel of this embodiment, Fig. 17B an enlarged cross-sectional view of a ridge line area at the tip, and Fig. 17C an enlarged view of a circular area indicated by an alternate long and short dash line in Fig. 17A. The first step of manufacturing the scribing wheel is, as illustrated in Fig. 17A, forming a through-hole 342 serving as a shaft hole in the center of a disk 341 serving as a scribing wheel base material made of cemented carbide, ceramic, or the like. Then, grinding the entire circumferential edge of the disk 341 from both sides while rotating the disk 341 around the central axis with the shaft of a motor or the like being connected into the through-hole 342 forms the circumference edge in a V-shape. Tilted surfaces forming the V-shape formed in this manner are collectively defined as a ground surface 343. In this case again, repeating a CVD method in the same manner as that in embodiment 7 coats a multilayer diamond film 344 at a blade edge area of the scribing wheel, and the same method as that described above performs grinding. Given that the diamond film 344 is 20 µm thick, as illustrated in Fig. 17C, grooves 345 are formable within the thickness of the diamond film 344. The depth of the grooves of the scribing wheel for making the scribing wheel highly penetrable is, for example, approximately 10 µm, and therefore forming the grooves 345 in the diamond film 344 can realize a highly penetrable scribing wheel.

1 Also, instead of this, preliminarily forming grooves in the V-shaped blade edge of the scribing wheel base material, and coating the scribing wheel base material with a diamond film by a CVD method, followed by grinding may configure a scribing wheel.

### (Embodiment 9)

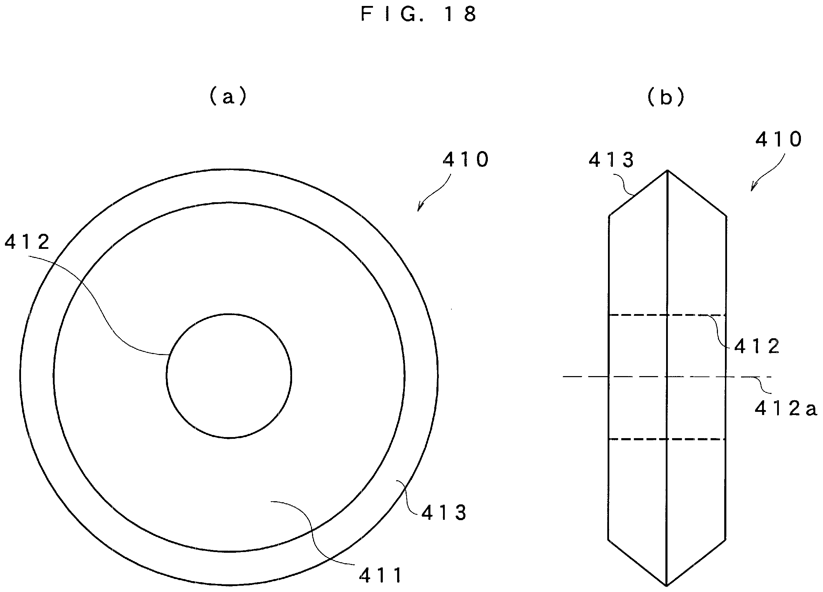

Fig. 18(a) is a front view of a scribing wheel according to embodiment 9 of the present invention, and Fig. 18(b) is a side view of the scribing wheel. Scribing wheel manufacturing uses cemented carbide as a material for a disk serving as a scribing wheel base material. The cemented carbide is one formed by sintering tungsten carbide (WC) particles as a main component with use of cobalt (Co) as a binder. The first step is, as illustrated in Fig. 18(a), in the center of the disk 411 made of the cemented carbide, forming a through-hole 412 serving as a shaft hole. Then, grinding the entire circumferential edge of the disk 411 from both sides while rotating the disk 411 around the central axis 412a of the disk 411 with the rotary shaft of a motor or the like being connected into the through-hole 412 forms the circumference edge in a vertically cross-sectionally substantial V-shape having tilted surfaces and a ridge line as illustrated in Fig. 18(b). The tilted surfaces forming the V-shape formed in this manner are collectively defined as a ground surface 413.

Cemented carbide selected as the cemented carbide for the scribing wheel base material is one using the tungsten carbide (WC) micro-particles having an average particle size of 0.5 µm or more, desirably 0.7 µm or more, and 2.0 µm or less, desirably 1.2 µm or less as the main component. In the case where the particle size of the tungsten carbide particles as the cemented carbide material is too small, binding force between the tungsten carbide particles after the sintering for forming the cemented carbide is weak, thus resulting in a reduction of the strength of the cemented carbide. This causes peeling off of a diamond film formed on the cemented carbide together with the surface layer of the cemented carbide to thereby reduce the life of the film. On the other hand, in the case where the particle size of the tungsten carbide particles is too large, gaps between the tungsten carbide particles are also large, causing cobalt to be removed, and as a result, the strength of the surface layer of the cemented carbide reduces to thereby easily peel off the diamond film as well.

Also, a weight ratio of cobalt as the binder for the cemented carbide is, for example, 4 % or more, desirably 5 % or more, and 8% or less, desirably 6% or less. Too large cobalt content significantly reduces the strength of the surface layer of the cemented carbide due to the removal of cobalt, thus facilitating peeling off of the diamond film. On the other hand, too small cobalt content makes gaps between the tungsten carbide particles smaller after the removal of cobalt, and as a result, when forming the diamond film, it is difficult to securely attach diamond particles serving as nuclei, thus making it difficult to uniformly form the film.

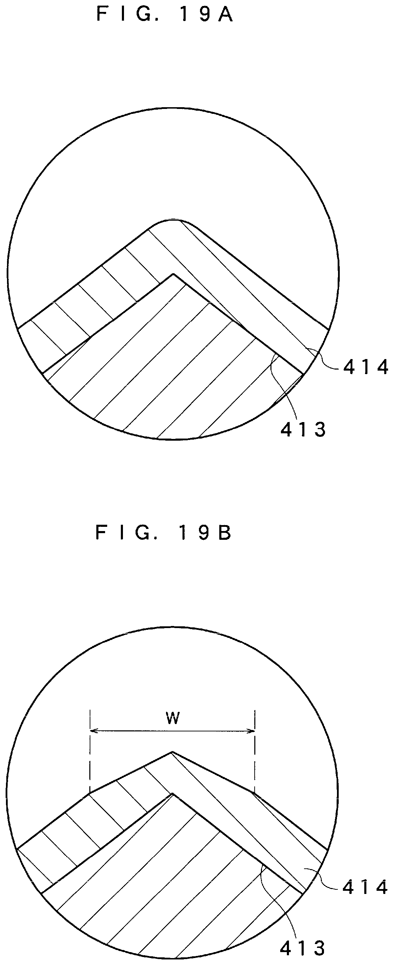

Next, described is the formation of the diamond thin film using an enlarged cross-sectional view of a ridge line area of the blade edge in Fig. 19A. First, preliminarily roughening a ground surface 13 of the blade edge of the base material facilitates the attachment of the diamond film. Roughening the ground surface facilitates the attachment of the diamond particles serving as nuclei. After that, a well-known method such as acid treatment removes cobalt in the surface layer of the ground surface 413. In the case where cobalt remains in the surface layer, when forming the diamond film, diamond changes into graphite to prevent the formation of the film. Also, the removal of cobalt forms the gaps between the tungsten carbide particles into fine irregularities, thus facilitating the attachment of the diamond particles serving as nuclei as well. Subsequently, after forming diamond serving as nuclei having grain sizes of submicrometer or less on the ground surface 413, a chemical vapor deposition method (CVD method) grows the diamond thin film. In this manner, the chemical vapor deposition method forms the diamond film 414 having a thickness of, for example, 20 to 30 µm on a V-shaped tilted surface area of the scribing wheel base material. Then, grinding sharpens at least a tip area. The grinding is performable by various grinding methods such as mechanical grinding. For example, mechanical grinding may perform the grinding, using abrasive. Fig. 19B is a partially enlarged cross-sectional view illustrating a state after the grinding.
The grinding may form a more obtuse angle than an apex angle of the original diamond film 414 by, for example, approximately 5°. Also, the grinding makes a plane including a circle formed by the ground ridge line perpendicular to a through-hole 412. Note that a grinding area may be only a zonal area including the ridge line as a centerline. An area having the width w in Fig. 19B indicates the ground area in a tip area, and the width w is set to, for example, 10 to 20 µm.

Grinding in this manner can improve the abrasive resistance of the scribing wheel as compared with the conventional scribing wheel made of sintered diamond because diamond covers the entire area coming into contact with a brittle material substrate. Also, covering the entire area coming into contact with a brittle material substrate with the diamond film makes it possible to reduce the roughness of the ridge line. Accordingly, using this scribing wheel to scribe and then divide a brittle material substrate results in effects capable of improving the end surface accuracy of a cut surface of the brittle material substrate, and as a result also improving the end surface strength. Further, effects capable of increasing the strength of the surface of the cemented carbide even in a state where surface cobalt used for the base material is removed, and also making the diamond film less likely to be peeled off due to the facilitation of the attachment of the diamond particles serving as nuclei are obtainable. For these reasons, the scribing wheel of the present invention is suitable to scribe a hard brittle material substrate such as a ceramic substrate.

Note that as illustrated in Fig. 19B, this embodiment forms the diamond film on the V-shaped ground surface 413; however, the ridge line area at the tip of the disk 411 may include circumferential surface parallel to the rotational axis of the scribing wheel. The circumferential surface may not be parallel to the rotational axis, but may be of an outward convex U-shape or V-shape, or of an inward V-shape.

### (Embodiment 10)

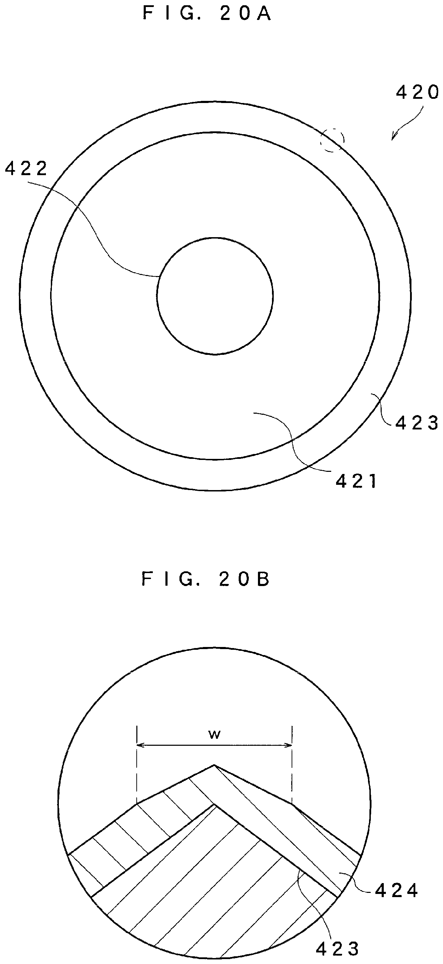

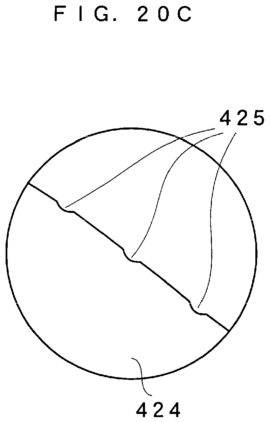

Next, described is embodiment 10 of the present invention. Japanese Patent No. 3074143 proposes the scribing wheel that is made highly penetrable by forming a number of grooves in the circumferential surface of the scribing wheel at the predetermined intervals, and using the areas between the grooves as the protrusions. The present invention is also applicable to such a scribing wheel. Fig. 20A is a front view of a scribing wheel of this embodiment, Fig. 20B an enlarged cross-sectional view of a ridge line area at the tip, and Fig. 20C an enlarged view of a circular area indicated by an alternate long and short dash line in Fig. 20A. This embodiment also uses a scribing wheel base material made of the same cemented carbide as that used by embodiment 1. The first step of manufacturing the scribing wheel is, as illustrated in Fig. 20A, forming a through-hole 422 serving as a shaft hole in the center of a disk 421 serving as the scribing wheel base material. Then, grinding the entire circumferential edge of the disk 421 from both sides while rotating the disk 421 with the rotary shaft of a motor or the like being connected into the through-hole 412 forms the circumference edge in a vertically cross-sectionally substantial V-shape having tilted surfaces and a ridge line. The tilted surfaces forming the V-shape formed in this manner are collectively defined as a ground surface 423. In this case again, a CVD method coats a diamond film 424 on a blade edge area of the scribing wheel base material in the same manner as that in embodiment 1, followed by grinding. Given that the diamond film 424 is 20 µm thick, as illustrated in Fig. 20C, grooves 425 are formable within the thickness of the diamond film 424. The depth of the grooves of the scribing wheel for making the scribing wheel highly penetrable is, for example, approximately 10 µm, and therefore forming the grooves 425 in the diamond film 424 can realize a highly penetrable scribing wheel.

Also, instead of this, preliminarily forming grooves in the V-shaped blade edge of the scribing wheel base material, and coating the scribing wheel base material with a diamond film by a CVD method, followed by grinding may configure the scribing wheel.

Note that each of the embodiments of the present invention uses, as the scribing wheel base material, the material containing tungsten carbide having grain sizes within the predetermined range and cobalt used as the binder; however, the material may further additionally include another material such as titanium oxide or tantalum oxide.

### EXAMPLES

### (Examples of embodiment 1)

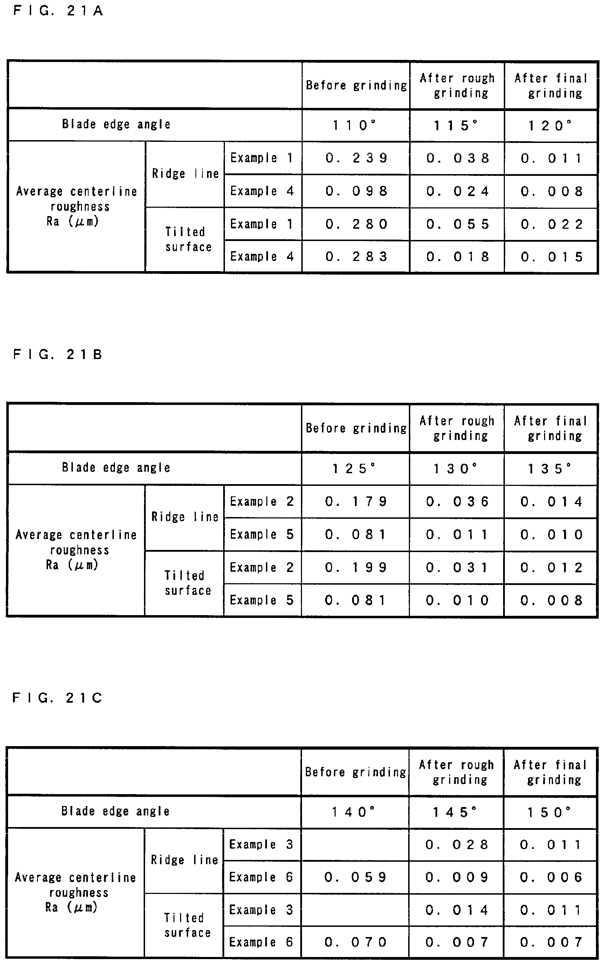

Next, described are states before and after grinding of a scribing wheel in examples of embodiment 1. Among the examples, on a cemented carbide scribing wheel base material having an outside diameter of 2 mm, forming a diamond film having a grain size of approximately 5 µm constituted examples 1, 2, and 3, and forming a diamond film having a grain size of approximately 0.5 µm constituted examples 4, 5, and 6. In any of examples 1 and 4, an apex angle α1 of the blade edge before grinding was 110°, rough grinding performed grinding using an abrasive of grit number of 8000 so as to form 115° as an apex angle a2 after the end of the rough grinding, and final grinding performed grinding using an abrasive of grit number of 15000 so as to form 120° as an apex angle a3 after the end of the final grinding. The thickness of the thinnest area near the ridge line of the ground diamond film 14 was set to, for example, 20 µm. Fig. 21A shows the arithmetic average roughnesses Ra of a ridge line area and a tilted surface that is at a certain distance from the ridge line area and on a line parallel to the ridge line in these two examples.

In any of examples 2 and 5, an apex angle α1 of the blade edge before grinding was 125°, using an abrasive of grit number of 8000 to perform grinding formed 130° as an apex angle a2 after the rough grinding, and using an abrasive of grit number of 15000 to perform grinding formed 135° as an apex angle α3 after the final grinding. Fig. 21B shows the arithmetic average roughnesses Ra of a ridge line area and a tilted surface that is at a certain distance from the ridge line area and on a line parallel to the ridge line in these two examples.

Also, in any of examples 3 and 6, an apex angle α1 of the blade edge before grinding was 140°, using an abrasive of grit number of 8000 to perform grinding formed 145° as an apex angle α2 after the rough grinding, and using an abrasive of grit number of 15000 to perform grinding formed 150° as an apex angle α3 after the final grinding. Fig. 21C shows the arithmetic average roughnesses Ra of a ridge line area and a tilted surface that is at a certain distance from the ridge line area and on a line parallel to the ridge line in these two examples.

In any of examples 1 to 6, during the final grinding, the grinding was processable without any chipping from the surface. In any of the examples, the arithmetic average roughness of the ground surface after the final grinding is 0.022 µm or less, and except for the value of the tilted surface in example 1, 0.015 µm or less. The arithmetic average roughnesses in examples 4 to 6 are smaller than those in examples 1 to 3. This may be because in examples 1 to 3, the grain sizes are larger, and therefore the arithmetic average roughnesses of the film surfaces before the grinding are also larger. However, even in such examples, performing the final grinding can sufficiently reduce the arithmetic average roughnesses Ra after the final grinding, and therefore using any of the scribing wheels to perform scribing followed by cutting can improve the edge surface accuracy of a brittle material substrate.

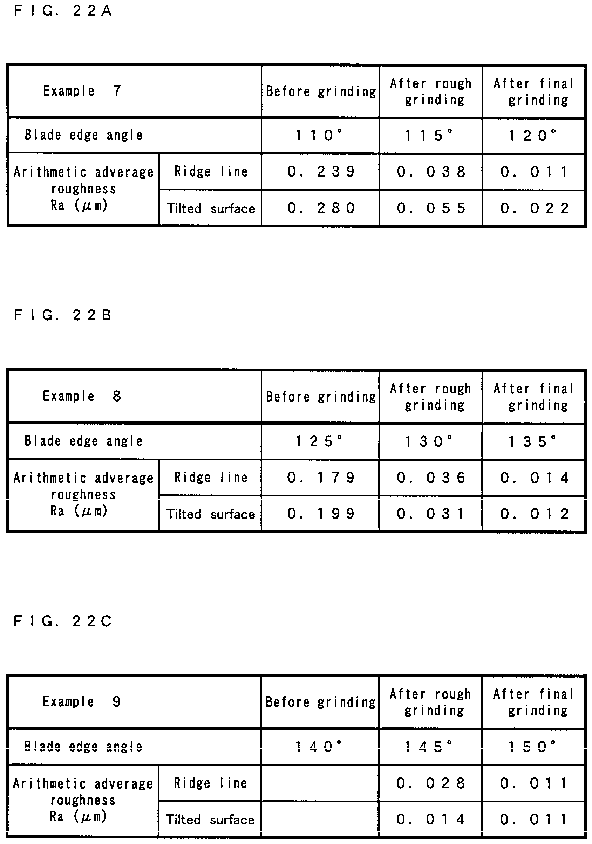

Next, described are states before and after grinding of a scribing wheel in examples realizing embodiment 5 or 6. Any of examples 7 to 9 relates to the scribing wheel according to embodiment 5 in which the chemical vapor deposition method forms the single-layer of diamond film on the cemented carbide scribing wheel base material having an outside diameter of 2 mm. In example 7, a blade edge angle before grinding was 110°, rough grinding performed grinding using an abrasive of grit number of 8000 so as to form 115° as the blade edge angle after the end of the rough grinding, and final grinding performed grinding using an abrasive of grit number of 15000 so as to form 120° after the end of the final grinding. The thickness d of the thinnest area near the ridge line of the diamond film 214 was set to, for example, 20 µm. Fig. 22A shows the arithmetic average roughnesses Ra of a ridge line area and a tilted surface that is at a certain distance from the ridge line area and on a line parallel to the ridge line in example 7.

In example 8, a blade edge angle before grinding was 125°, using an abrasive of grit number of 8000 to perform grinding formed 130° after the rough grinding, and using an abrasive of grit number of 15000 to perform grinding formed 135° after the final grinding. Fig. 22B shows the arithmetic average roughnesses Ra of a ridge line area and a tilted surface that is at a certain distance from the ridge line area and on a line parallel to the ridge line in example 8.

In example 9, a blade edge angle before grinding was 140°, using an abrasive of grit number of 8000 to perform grinding formed 145° after the rough grinding, and using an abrasive of grit number of 15000 to perform grinding formed 150° after the final grinding. Fig. 22C shows the arithmetic average roughnesses Ra of a ridge line area and a tilted surface that is at a certain distance from the ridge line area and on a line parallel to the ridge line in example 9.

In any of examples 7 to 9, during the grinding, the grinding was processable without any chipping from the surface. In examples 7 to 9, performing the rough grinding and the final grinding reduces an arithmetic average roughness, and the arithmetic average roughnesses after the final grinding is at most 0.022 µm for the tilted surface in example 7. Accordingly, using any of the scribing wheels to scribe a brittle material substrate followed by cutting can improve the edge surface accuracy of the brittle material substrate.

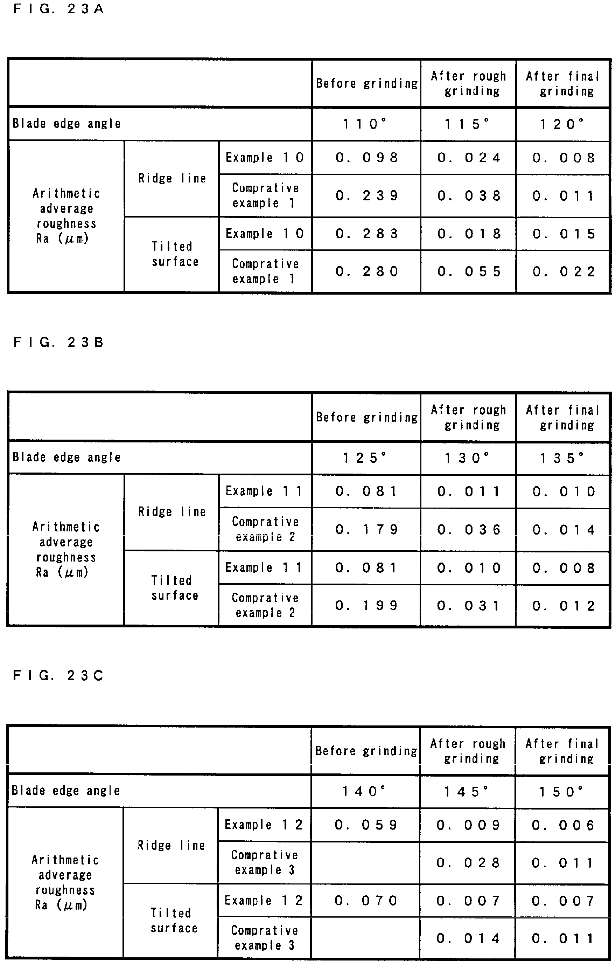

Next, described are states before and after grinding of a scribing wheel in examples 10, 11, and 12 realizing embodiment 7 or 8 while making comparisons with comparative examples. Any of the examples and comparative examples used a cemented carbide scribing wheel base material having an outside diameter of 2 mm. In any of scribing wheels in examples 10, 11, and 12, a chemical vapor deposition method formed a diamond film having a grain size of 2 µm or less according to embodiment 7, whereas in any of comparative examples 1, 2, and 3, formed was a diamond film having a larger grain size of approximately 5 µm. In any of example 10 and comparative example 1, a blade edge angle before grinding was 110°, rough grinding performed grinding using an abrasive of grit number of 8000 so as to form 115° as a blade edge angle after the end of the rough grinding, and final grinding performed grinding using an abrasive of grit number of 15000 so as to form 120° after the end of the final grinding. The thickness d of the thinnest area near the ridge line of the diamond film 314 was set to, for example, 20 µm. Fig. 23A shows the arithmetic average roughnesses Ra of a ridge line area and a tilted surface that is at a certain distance from the ridge line area and on a line parallel to the ridge line in the two examples.

In example 11 and comparative example 2, a blade edge angle before grinding was 125°, using an abrasive of grit number of 8000 to perform grinding formed 130° after the rough grinding, and using an abrasive of grit number of 15000 to perform grinding formed 135° after the final grinding. Fig. 23B shows the arithmetic average roughnesses Ra of a ridge line area and a tilted surface that is at a certain distance from the ridge line area and on a line parallel to the ridge line in the two examples.

In any of example 12 and comparative example 3, a blade edge angle before grinding was 140°, using an abrasive of grit number of 8000 to perform grinding formed 145° after the rough grinding, and using an abrasive of grit number of 15000 to perform grinding formed 150° after the final grinding. Fig. 23C shows the arithmetic average roughnesses Ra of a ridge line area and a tilted surface that is at a certain distance from the ridge line area and on a line parallel to the ridge line in the two examples.

In any of examples 10 to 12 and comparative examples 1 to 3, during the grinding, the grinding was processable without any chipping from the surface. The arithmetic average roughnesses in examples 10 to 12 are smaller than those in comparative examples 1 to 3. This may be because a grain size increases along with the growth of diamond, and consequently average roughness also increases. Also, in any of examples 10 to 12, a finish state is better than those in the comparative examples having coarse grains even after the rough grinding and the final grinding, and the arithmetic average grain size in examples 1 to 3 is at most 0.015 µm for the tilted surface in example 1. Also, among the scribing wheels in examples 10 to 12, there is one of which an arithmetic average roughness is 0.015 µm or less even at the stage of rough grinding. Accordingly, in the case of grinding a diamond film having a grain size of 2 µm or less to manufacture a scribing wheel, a grinding process is simplifiable. Also, in the case of performing the same final grinding as that for a diamond film having a large grain size, the arithmetic average roughness of a surface is more reducible, and therefore using any of the scribing wheels to scribe a brittle material substrate followed by cutting can further improve the edge surface accuracy of the brittle material substrate.

### Industrial Applicability

The present invention can provide a scribing wheel that has high abrasion resistance and high peeling resistance and makes it possible to cut a brittle material substrate having high edge surface strength, and the scribing wheel is preferably applicable to a scribing machine.

### Explanation of References

- 10: Scribing wheel
- 11: Disk
- 12: Through-hole
- 12a: Rotational axis
- 13: Ground surface
- 14: Diamond film
- 15: First ground surface
- 16: Second ground surface
- 110, 130: Scribing wheel
- 111, 131: Disk
- 112, 132: Through-hole
- 113, 133: Ground surface
- 114, 134: Diamond film
- 116: Circumferential surface
- 120: Straight grinding wheel
- 121: Cup grinding wheel
- 135: Groove
- 210, 230: Scribing wheel
- 211, 231: Disk
- 212, 232: Through-hole
- 213, 233: Ground surface
- 214, 234: Diamond film
- 216: Circumferential surface
- 235: Groove
- 310, 340: Scribing wheel
- 311, 341: Disk
- 312, 342: Through-hole
- 313, 343: Ground surface
- 314, 344: Diamond film
- 316: Circumferential surface
- 320: Diamond nucleus
- 345: Groove
- 410, 420: Scribing wheel
- 411, 421: Disk
- 412, 422: Through-hole
- 413, 423: Ground surface
- 414, 424: Diamond film
- 416: Circumferential surface
- 425: Groove

## Claims

1. A method for manufacturing a scribing wheel (10; 110; 210; 310) that is formed with a ridge line along a circumferential area and has a blade edge including said ridge line and tilted surfaces (13; 113; 213; 313) on both sides of said ridge line, the method comprising:
rough grinding said tilted surfaces (13; 113; 213; 313) including a ridge line area of a disk-shaped scribing wheel base material (11; 111; 211; 311) with an abrasive to form first ground surfaces (15), said ridge line area where the tilted surfaces (13; 113; 213; 313) obliquely formed along the circumferential area by lateral surfaces on both sides intersect with each other being formed of a diamond film (14; 114; 214; 314); and
grinding, in particular final grinding, tilted surfaces including a ridge line area of said first ground surface (15) with an abrasive having a finer grit than an abrasive for said rough grinding to form second ground surfaces (16).

2. A method for manufacturing a scribing wheel (210) according to claim 1, the method further comprising:
generating diamond nuclei on the blade edge area of said scribing wheel base material (211), and growing a diamond film (214) containing diamond grains by a chemical vapor deposition method to form a single layer of diamond film, wherein
said diamond film (214) has an average grain size of 2 to 10 µm, and
a thickness near the ridge line of said diamond film (214) is 5 to 25 µm.

3. A method for manufacturing a scribing wheel (310) according to claim 1, the method further comprising:
generating diamond nuclei on the blade edge area of said scribing wheel base material (311), and growing a diamond film (314) containing diamond grains by a chemical vapor deposition method to form a diamond film (314), wherein
said diamond film (314) has an average grain size of 2 µm or less,
and
a thickness near the ridge line of said diamond film (314) is 5 to 25 µm.

4. A scribing wheel (10; 110; 210; 310) that is formed with a ridge line along a circumferential area and has a blade edge including said ridge line and tilted surfaces (13; 113; 213; 313) on both sides of said ridge line, the scribing wheel (10; 110; 210; 310) comprising:
a scribing wheel base material (11; 111; 211; 311) formed with a blade edge area along a circumference of a disk;
a diamond film (14; 114; 214; 314) formed on a blade edge surface of said scribing wheel base material (11; 111; 211; 311);
first ground surfaces (15) ground with an abrasive in areas on both sides of a ridge line formed of said diamond film (14; 114; 214; 314); and
second ground surfaces (16) ground with an abrasive in areas on both sides of a ridge line at a tip of said first ground surface (15), wherein:
an angle (α3) of an apex where said second ground surfaces (16) intersect with each other is larger than an angle (α2) of an apex where said first ground surfaces (15) intersect with each other; and
arithmetic average roughness Ra of said second ground surfaces (16) is smaller than arithmetic average roughness Ra of said first ground surfaces (15).

5. A scribing wheel (10; 110; 210; 310) according to claim 4, wherein arithmetic average roughness Ra of said ground surface is 0.03 µm or less.

6. A scribing wheel (10; 110; 210; 310) according to claim 4, wherein arithmetic average roughness Ra of a ridge line area where said ground surfaces intersect with each other is 0.03 µm or less.

7. A scribing wheel (210) according to claim 4, wherein
said diamond film (214) is a single layer of diamond film formed by growing a diamond film having an average diamond grain size of 2 to 10 µm, and
a thickness near the ridge line of said diamond film (214) is 5 to 25 µm.

8. A scribing wheel (310) according to claim 4, wherein
said diamond film (314) is formed by growing a diamond film having an average diamond grain size of 2 µm or less on a blade edge surface of said scribing wheel base material (311), and
a thickness near the ridge line of said diamond film (314) is 5 to 25 µm.

## Patentansprüche

1. Verfahren zur Herstellung eines Anreißrads (10; 110; 210; 310), das entlang eines Umfangbereichs mit einer Kammlinie ausgebildet ist und eine Schneidkante hat, die die Kammlinie und geneigte Flächen (13; 113; 213; 313) auf beiden Seiten der Kammlinie umfasst, wobei das Verfahren Folgendes umfasst:
Grobschleifen der geneigten Flächen (13; 113; 213; 313) einschließlich eines Kammlinienbereichs eines scheibenförmigen Anreißrad-Grundmaterials (11; 111; 211; 311) mit einem Schleifmittel, um erste Schleifflächen (15) auszubilden, wobei der Kammlinienbereich, in dem sich die geneigten Flächen (13; 113; 213; 313) miteinander schneiden, die entlang des Umfangbereichs durch Seitenflächen auf beiden Seiten schräg ausgebildet sind, aus einer Diamantschicht (14; 114; 214; 314) ausgebildet ist; und
Schleifen, insbesondere Fertigschleifen, geneigter Flächen einschließlich eines Kammlinienbereichs der ersten Schleiffläche (14) mit einem Schleifmittel, das eine feinere Körnung als ein Schleifmittel für das Grobschleifen hat, um zweite Schleifflächen (16) auszubilden.

2. Verfahren zur Herstellung eines Anreißrads (210) nach Anspruch 1, wobei das Verfahren außerdem Folgendes umfasst:
Erzeugen von Diamantkeimen auf dem Schneidkantenbereich des Anreißrad-Grundmaterials (211) und Aufwachsen einer Diamantkörner enthaltenden Diamantschicht (214) durch ein chemisches Dampfabscheidungsverfahren, um eine Einzellage an Diamantschicht auszubilden, wobei
die Diamantschicht (214) eine mittlere Korngröße von 2 bis 10 µm hat und
eine Dicke nahe der Kammlinie der Diamantschicht (214) 5 bis 25 µm beträgt.

3. Verfahren zur Herstellung eines Anreißrads (310) nach Anspruch 1, wobei das Verfahren außerdem Folgendes umfasst:
Erzeugen von Diamantkeimen auf dem Schneidkantenbereich des Anreißrad-Grundmaterials (311) und Aufwachsen einer Diamantkörner enthaltenden Diamantschicht (314) durch ein chemisches Dampfabscheidungsverfahren, um eine Diamantschicht (314) auszubilden, wobei
die Diamantschicht eine mittlere Korngröße von 2 µm oder weniger hat und
eine Dicke nahe der Kammlinie der Diamantschicht (314) 5 bis 25 µm beträgt.

4. Anreißrad (10; 110; 210; 310) das entlang eines Umfangsbereichs mit einer Kammlinie ausgebildet ist und eine Schneidkante hat, die die Kammlinie und geneigte Flächen (13; 113; 213; 313) auf beiden Seiten der Kammlinie umfasst, wobei das Anreißrad (10; 110; 210; 310) Folgendes umfasst:
ein Anreißrad-Grundmaterial (11; 111; 211; 311), das entlang eines Umfangs einer Scheibe mit einem Schneidkantenbereich ausgebildet ist;
eine Diamantschicht (14; 114; 214; 314), die auf einer Schneidkantenfläche des Anreißrad-Grundmaterials (11; 111; 211; 311) ausgebildet ist;
erste Schleifflächen (15), die in Bereichen auf beiden Seiten einer Kammlinie, die aus der Diamantschicht (14; 114; 214; 314) ausgebildet ist, mit einem Schleifmittel geschliffen sind; und
zweite Schleifflächen (16), die in Bereichen auf beiden Seiten einer Kammlinie an einer Spitze der ersten Schleiffläche (15) mit einem Schleifmittel geschliffen sind, wobei:
ein Winkel (α3) einer Spitze, an der sich die zweiten Schleifflächen (16) miteinander schneiden, größer als ein Winkel (α2) einer Spitze ist, an der sich die ersten Schleifflächen (15) miteinander schleifen; und
der Mittenrauwert Ra der zweiten Schleifflächen (16) kleiner als der Mittenrauwert Ra der ersten Schleifflächen (15) ist.

5. Anreißrad (10; 110; 210; 310) nach Anspruch 4, wobei der Mittenrauwert Ra der Schleiffläche 0,03 µm oder weniger beträgt.

6. Anreißrad (10; 110; 210; 310) nach Anspruch 4, wobei
der Mittenrauwert Ra eines Kammlinienbereichs, in dem sich die Schleifflächen miteinander schneiden, 0,03 µm oder weniger beträgt.

7. Anreißrad (210) nach Anspruch 4, wobei
die Diamantschicht (214) eine Einzellage an Diamantschicht ist, die durch Aufwachsen einer Diamantschicht, die eine mittlere Diamantkorngröße von 2 bis 10 µm hat, ausgebildet ist, und
eine Dicke nahe der Kammlinie der Diamantschicht (214) 5 bis 25 µm beträgt.

8. Anreißrad (310) nach Anspruch 4, wobei
die Diamantschicht (314) durch Aufwachsen einer Diamantschicht, die eine mittlere Diamantkorngröße von 2 µm oder weniger hat, auf einer Schneidkantenfläche des Anreißrad-Grundmaterials (311) ausgebildet ist und
eine Dicke nahe der Kammlinie der Diamantschicht (314) 5 bis 25 µm beträgt.

## Revendications

1. Procédé pour fabriquer une roue de rainurage (10 ; 110 ; 210 ; 310) qui est formée avec une ligne de crête le long d'une zone circonférentielle et a un bord de lame comprenant ladite ligne de crête et des surface inclinées (13 ; 113 ; 213 ; 313) des deux côtés de ladite ligne de crête, le procédé comprenant les étapes consistant à :
polier grossièrement lesdites surfaces inclinées (13 ; 113 ; 213 ; 313) comprenant une zone de ligne de crête d'un matériau de base de roue de rainurage en forme de disque (11 ; 111 ; 211 ; 311) avec un abrasif afin de former des premières surfaces polies (15), ladite zone de ligne de crête où les surfaces inclinées (13 ; 113 ; 213 ; 313) formées de manière oblique le long de la zone circonférentielle par des surfaces latérales des deux côtés, se coupent, étant formées avec un film diamant (14 ; 114 ; 214 ; 314) ; et
polir, en particulier un polissage final, les surfaces inclinées comprenant une zone de ligne de crête de ladite première surface polie (15) avec un abrasif ayant un grain plus fin qu'un abrasif pour ledit polissage grossier afin de former des secondes surfaces polies (16).

2. Procédé pour fabriquer une roue de rainurage (210) selon la revendication 1, le procédé comprenant en outre l'étape consistant à :
générer des noyaux de diamant sur la zone de bord de lame dudit matériau de base de roue de rainurage (211), et développer un film diamant (214) contenant des grains de diamant par un procédé de dépôt chimique en phase vapeur pour former une seule couche de film diamant, dans lequel :
ledit film diamant (214) a une taille de grain moyenne de 2 à 10 µm, et
une épaisseur à proximité de la ligne de crête dudit film diamant (214) est de 5 à 25 µm.

3. Procédé pour fabriquer une roue de rainurage (310) selon la revendication 1, le procédé comprenant en outre l'étape consistant à :
générer des noyaux de diamant sur une zone de bord de lame dudit matériau de base de roue de rainurage (311), et développer un film diamant (314) contenant des grains de diamant par un procédé de dépôt chimique en phase vapeur pour former un film diamant (314), dans lequel :
ledit film diamant (314) a une taille de grain moyenne de 2 µm ou moins, et
une épaisseur proche de la ligne de crête dudit film diamant (314) est de 5 à 25 µm.

4. Roue de rainurage (10 ; 110 ; 210 ; 310) qui est formée avec une ligne de crête le long d'une zone circonférentielle et a un bord de lame comprenant ladite ligne de crête et des surfaces inclinées (13 ; 113 ; 213 ; 313) des deux côtés de ladite ligne de crête, la roue de rainurage (10 ; 110 ; 210 ; 310) comprenant :
un matériau de base de roue de rainurage (11 ; 111 ; 211 ; 311) formé avec une zone de bord de lame le long d'une circonférence d'un disque ;
un film diamant (14 ; 114 ; 214 ; 314) formé sur une surface de bord de lame dudit matériau de base de roue de rainurage (11 ; 111 ; 211 ; 311) ;
des premières surfaces polies (15) polies avec un abrasif dans des zones des deux côtés d'une ligne de crête formée sur ledit film diamant (14 ; 114 ; 214 ; 314) ; et
des secondes surfaces polies (16) polies avec un abrasif dans les zones des deux côtés d'une ligne de crête au niveau d'une pointe de ladite première surface polie (15), dans laquelle :
un angle (α3) d'un sommet où lesdites secondes surfaces polies (16) se coupent est supérieur à un angle (α2) d'un sommet où lesdites premières surfaces polies (15) se coupent ;
et
une rugosité moyenne arithmétique Ra desdites secondes surfaces polies (16) est inférieure à une rugosité moyenne arithmétique Ra desdites premières surfaces polies (15).

5. Roue de rainurage (10 ; 110 ; 210 ; 310) selon la revendication 4, dans laquelle :
la rugosité moyenne arithmétique Ra de ladite surface polie est de 0,03 µm ou moins.

6. Roue de rainurage (10 ; 110 ; 210 ; 310) selon la revendication 4, dans laquelle :
la rugosité moyenne arithmétique Ra d'une zone de ligne de crête où lesdites surfaces polies se coupent est de 0,03 µm ou moins.

7. Roue de rainurage (210) selon la revendication 4, dans laquelle :
ledit film diamant (214) est une couche unique de film diamant formé en développant un film diamant ayant une taille de grain de diamant moyenne de 2 à 10 µm, et
une épaisseur à proximité de la ligne de crête dudit film diamant (214) est de 5 à 25 µm.

8. Roue de rainurage (310) selon la revendication 4, dans laquelle :
ledit film diamant (314) est formé en développant un film diamant ayant une taille de grain de diamant moyenne de 2 µm ou inférieure sur une surface de bord de lame dudit matériau de base de roue de rainurage (311) ; et
une épaisseur à proximité de la ligne de crête dudit film diamant (314) est de 5 à 25 µm.
